# EUROPEAN PATENT APPLICATION

(11) **EP 4 814 090 A1**
(43) Date of publication of application: **30.09.2026**
(21) Application number: 25165594.0
(22) Date of filing: 24.03.2025
(51) Int. Cl.: C11D 3/37, C08G 64/02

(54) **HOME CARE COMPOSITIONS**

(71) Applicant: Unilever IP Holdings B.V., 6708 WH Wageningen (NL); Unilever Global IP Limited, Wirral, Merseyside CH62 4ZD (GB)
(72) Inventor: JARVIS, Adam Peter., 6708 WH Wageningen (NL); WILLIAMS, Charlotte Katherine., 6708 WH Wageningen (NL)
(74) Representative: Unilever Patent Group

(57) **Abstract**

A home care composition comprising a cleaning polymer comprising a repeating unit of formula I: 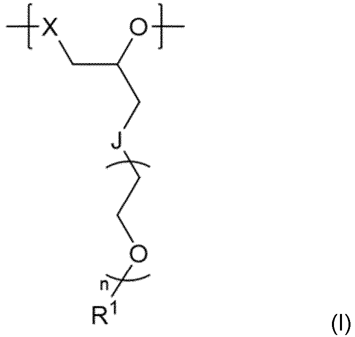 wherein:
n is a number 0 to 150;
J is O, alkylene C2-C22, or C-R'R" in which R' and R" are independently selected from H, or (1-10)C alkyl group;
X is:
i) a group X¹ of structure: 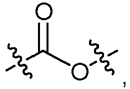 or
ii) a group X² of structure: 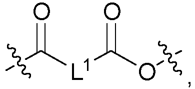 in which L¹ is a linker;
iii) a group X³ of structure: 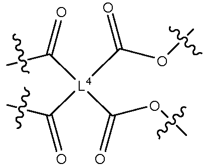 in which L⁴ is a linker separating at least two of the four carbonyl groups by a minimum of 3 bond lengths;
R¹ is H, C1-C22 alkyl or C1-C22 alkenyl, SO₃⁻, SO₃H, R², or Y;
R² is a group: 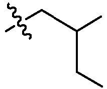 each R³ is independently H or Y; and
Y is a group of structure: 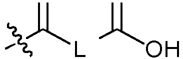 in which L² is a linker separating the two carbonyl groups by a distance of 3-4 bond lengths.

## Description

The present invention relates to home care compositions comprising novel polymers and methods using such compositions to treat a substrate such as a fabric, in particular to remove soils from the substrate.

Despite the prior art there is a need for improved home care compositions.

Cleaning polymers are used in consumer products to remove particulate and oily soils from fabrics.

It is an object of the present invention to provide home care compositions with improved soil removal benefits and/or anti-redeposition benefit.

Accordingly in a first aspect, there is provided a home care composition comprising a repeating unit of formula I: 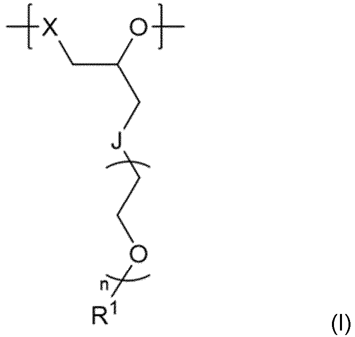 wherein:
n is a number 0 to 150;
J is O, alkylene C2-C22, or C-R'R" in which R' and R" are independently selected from H, or
(1-10C) alkyl group;
X is:
   i) a group X¹ of structure: 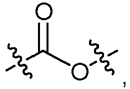 or
   ii) a group X² of structure: 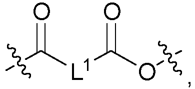 in which L¹ is a linker separating the two carbonyl groups by a distance of 3-4 bond lengths; or
   iii) a group X³ of structure: 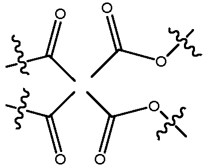 in which L⁴ is a linker separating at least two of the four carbonyl groups by a minimum of 3 bond lengths;
R¹ is H, C1-C22 alkyl or C2- 22 alkenyl, SO₃⁻, SO₃H, R², or Y;
R² is a group: 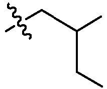
each R³ is independently H or Y; and
Y is a group of structure: 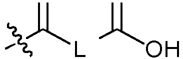
in which L² is a linker separating the two carbonyl groups by a distance of 3-4 bond lengths wherein the polymer comprises at least one amine.

In a further aspect, the invention provides a method of manufacturing a home care composition of the first aspect, the method comprising the step of including a polymer having a repeating unit of formula (I) in a home care composition.

In a further aspect the invention provides a method of treatment of a home care substrate with the composition of the first aspect of the invention.

In a further aspect, the invention provides use of a home care composition according to the first aspect to treat a substrate such as a fabric or hard surface.

Compositions of the invention are advantageous in that they provide improved soil removal benefits and/or anti-redeposition benefits.

Preferably the polymer comprises at least one amine. The or each amine reacts with soils on the substrate forming a bond with the soil. The amphiphilic properties of the polymer then work to remove the bonded soil from the substrate and prevent its redeposition.

Preferably, the amine is incorporated in the polymer in an end group of the polymer. Any end group may be present.

The polymer may have a structure according to formula II: 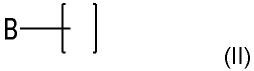 wherein:
each A is a polymeric chain comprising one or more repeating units of formula I;
B is an end group which comprises at least one amine, and to which the or each A is attached; and e is 1-25 (e.g., 1, 2, 3, 4, 5 or 6).

Alternatively, the polymer may have a structure according to formula Ila: 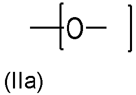 wherein B' is an end group which comprises at least one amine, and to which the or each A is attached; and e is 1-25 (e.g., 1, 2, 3, 4, 5 or 6).

The amine may be in an aliphatic or aromatic moiety e.g. a pyridine.

The amine is preferably of the formula: N-R, in which R may be selected from C1-C4-alkyl, H and a free electron pair ( so providing an amine of formula N:)

There may be 1 or 2 or 3 or 4 or 5 or 6 or 7 or 8 or 9 or more amines in an end group. Accordingly, the invention encompasses monoamines as well as polyamines.

The or each amine may be incorporated in the polymer by any suitable method, including during polymerisation, or by post-modification of the polymer following a polymerisation process. When by post-modification, the amine can be introduced by thiol-click chemistry. Synthesis methods are given below.

The end group may comprise a mono- or poly-amine, with one or more side chains bonded to at least one nitrogen atom.

Preferably at least one of the side chains branch from the at least one amine.

The amine in the end group may be quaternised partly or completely, with C1-C30 linear or branched alkyl, more preferably C1-C10 or even C1-C5 linear or branched alkyl, most preferably methyl. Thus, the amine may be a quaternary ammonium ion.

A non-limiting example of di-amine functionalised cleaning polymer is shown below. It comprises two amines in an end group and is synthesized using a chain transfer agent to incorporate both of the two amines.

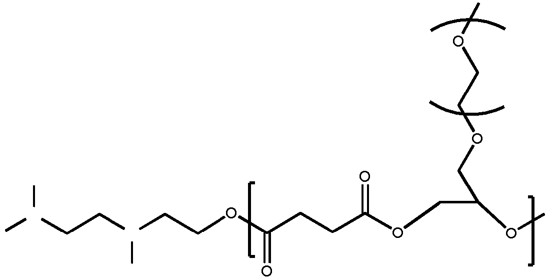

The amine functionality may be introduced during synthesis of the polymer via an amine-functionalised chain transfer agent (CTA) which is described below. The latter gives possibility of one amine (a monoamine polymer).

X may be a group X¹. In such instances, a carbonate linkage is formed between adjacent repeating units of formula I. The polymer may therefore comprise poly(carbonate) moieties and/or be a poly(carbonate). A repeating unit of formula I in which X is X¹ can be formed by ring-opening copolymerisation of CO₂ and an epoxide.

The polymer may comprise more than one X¹-containing repeating unit of formula I. For example, the polymer may comprise two different X¹-containing repeating units of formula I. The repeating units of formula I may be arranged in any order, e.g., alternating, randomly or as blocks.

X may be a group X². In such instances, an ester linkage is formed between adjacent repeating units of formula I. The polymer may therefore comprise poly(ester) moieties and/or be a poly(ester). A repeating unit of formula I in which X is X² can be formed by ring-opening copolymerisation of a cyclic anhydride and an epoxide.

The polymer may comprise more than one X²-containing repeating unit of formula I. For example, the polymer may comprise two different X²-containing repeating units of formula I. The repeating units of formula I may be arranged in any order, e.g., alternating, randomly or as blocks.

In some instances, the polymer comprises a first repeating unit of formula I, in which X is a group X¹, and a second repeating unit of formula I, in which X is a group X². The polymer may therefore comprise poly(carbonate-co-ester) moieties and/or be a poly(carbonate-co-ester). The first and second repeating units of formula I may be arranged in any order, e.g., alternating, randomly or as blocks.

X may be X³. In some instances, the polymer comprises a first repeating unit of formula I, in which X is a group X³ and a second repeating unit of formula I in which X is X² or X¹. Preferably, when X is X³, it is present at a level of 0.01 - 5w%, 0.01 - 3.0w%, 0.01 - 1.5w%, most preferably 0.1 - 1.0w%.

n may be a number 0 to 80 (e.g., 1-80). Suitably, n is a number 0 to 50 (e.g., 1-50). In some instances, n may be a number 0 to 20 (e.g., 1 to 20).

n may be a number 0 to 4. Suitably, n is a number 0 to 3.

In some instances, n is 0. In others, it is 1, 2 or 3
In some instances, when n is 0, R¹ is not H.

J is most suitably O. Therefore, the repeating unit of formula I most suitably has a structure according to formula la: 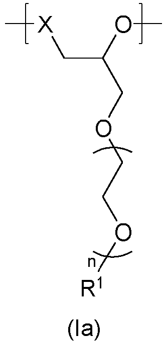
wherein X, n and R¹ are as defined hereinbefore.
R' and R" may be a 1-10 C alkyl.

In some instances, R¹ is H, (1-22C)alkyl, (2-22C)alkenyl.

In some instances, R¹ is R² or Y.

In some instances, R¹ is H, (1-22C)alkyl, (2-22C)alkenyl or R², and R³ is H.

In some instances, R¹ is H, (1-22C)alkyl, (2-22C)alkenyl or Y, and R³ is H.

In some instances, R¹ is H or R², and R³ is H.

In some instances, R¹ is R² or Y, and R³ is Y.

In situations where R¹ is R², each oxygen atom in R² may be bound to its own Y group, or both oxygen atoms in R² may be coordinated to a single Y group, e.g.:

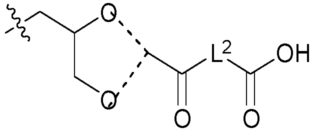

The polymer of formula I may be described as comprising a main chain and depending therefrom, a side chain, wherein the main chain comprises: 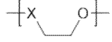 and includes X and O and the side chain excludes X and O and comprise the structure below

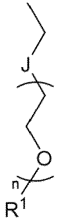

Preferably, J, n, X and R1 are independently selected to provide a balance of hydrophobicity and hydrophilicity between the main chain and the side chain. A balance of hydrophobicity and hydrophilicity provides soil removal properties. This feature works synergistically with the amine functionality.

The main chain may be hydrophobic and the side chain may be hydrophilic (relative to the main chain) or vice versa.

In the case of a hydrophobic main chain, if X=X₂ , then L¹ (described below in more detail) is preferably selected from hydrophobic alkyl and aryl linker groups.

In the case of a hydrophilic side chain, such as described above, preferably n is greater than 2 and most preferably 7 - 23, and R¹ is preferably selected for hydrophilicity, more preferably R¹ is CH₃ or SO₃⁻.

In the case of a hydrophilic main chain, X is X1 or is X2 where L1 is selected from less hydrophobic alkyl and aryl linker groups, J is preferably -O-. n and R1 are dependently selected to balance hydrophilicity and hydrophobicity, R1 is selected from C12-C22 alkyl oralkenyl such that n is preferably < 3 and most preferably = 0 where R1 is a C1-C8 alkyl but n can be < 100 and most preferably < 23 where R1 is a C8-C30 alkyl.

In the case of a hydrophilic main chain it may be desirable to compose it from combinations of different repeat units (I) (i.e. copolymers) where at least one (or more) repeat unit(s) is (are) selected to have a hydrophobic side chain as described above and where at least one (or more) is (are) selected to have a hydrophilic side chain i.e. preferably n > 2 and most preferably 7 - 23 and R1 is preferably selected for hydrophilicity, more preferably R1 is Y where L2 is selected from less hydrophobic linker groups or R1 is more preferably a sulphonated or caboxylated aryl group, most preferably where the aryl is a phenyl group.

Di-block polymers are envisaged, comprising a first block and a second block in which the first block is provided by the end group and may be hydrophilic (e.g. comprising PEG) and the second block is provided by the structure A and is hydrophobic.

The inclusion in a single repeat unit of formula I, of amphiphilicity by both at least one hydrobphobic portion and at least one hydrophilic portion (by selection of different preferences for X, J, n and R1) is highly advantageous as it is possible to design soil removal properties into a single repeat unit.

As described above L1 is a linker in structure X2:

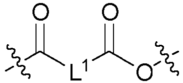

L¹ separate the two carbonyl groups of the X² structure by a distance of 3-4 bond lengths. To illustrate this separation, non-limiting examples of L¹ are depicted below, which have been annotated to show the relevant number of bonds lengths.

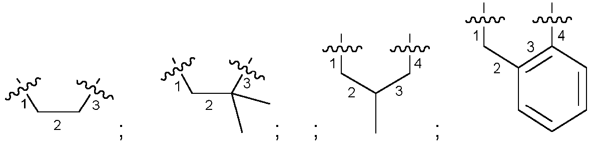

It will be understood that X² groups can be obtained by ring opening of a 5- to 7-membered cyclic anhydride, in which the linker between the two carbonyls of the anhydride group becomes L¹. A variety of 5- to 7-membered cyclic anhydride are readily available and may be used to prepare the polymer of the invention.

L¹ may have one of the following structures where R⁴ is independently selected from H, C1-C23 alkyl, C2-C23 alkenyl, C2-C23 alkynyl, C1-C23 alkoxyl, a halogen, a benzyl or a phenyl group, where R⁵ is selected from C1-C4 alkyl and where f = 2-4, g = 1-2 and h = 1-2 on the condition that g + h = 2-3, m = 1-5, and j + k is 0-2, and where two R⁴ substituents are linked such that when taken together with the atom(s) to which they are attached, they form a 3-7 membered carbocyclic ring or a 6-membered aromatic ring.

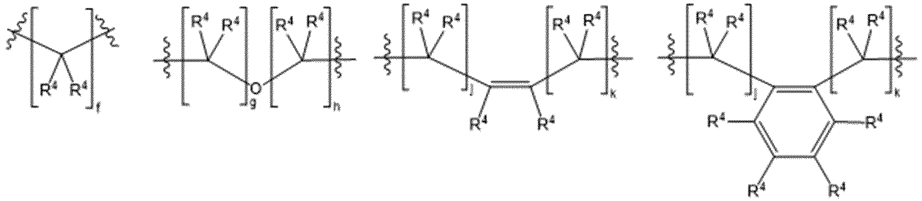

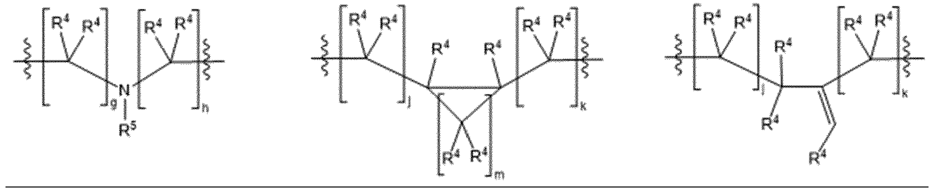

Preferably, R⁴= H, f = 2, g = h = 1, j + k = 0, m = 1 and R⁵ = C1. This is especially advantageous if the main chain is hydrophobic (as discussed above).

Preferably, at least one R⁴ is selected from C1-C23 alkyl, C2-C23 alkenyl, C2-C23 alkynyl, C1-C23 alkoxyl, a halogen, a benzyl or a phenyl group and most preferably R⁴ is selected from C8-C23 alkyl, C8-C23 alkenyl, C8-C23 alkynyl or a C8-C23 alkoxyl group where f > 2, j + k > 0, m > 1 and R⁵ is C2-C4 alkyl. This is especially advantageous if the main chain is hydrophobic (as discussed above).

L² may have a structure as described for L¹. L¹ may be the same as L² or they may be different to each other.

X³ has structure: 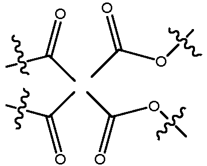 in which L⁴ is a linker separating at least two of the four carbonyl groups by a minimum of 3 bond lengths;

### L4 may include one or more amines.

Exemplary L4 structures below:

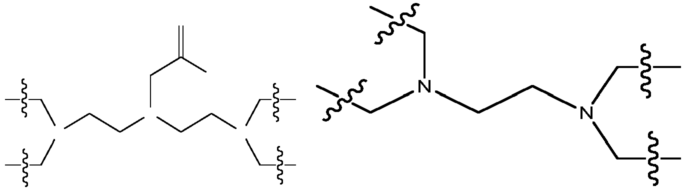

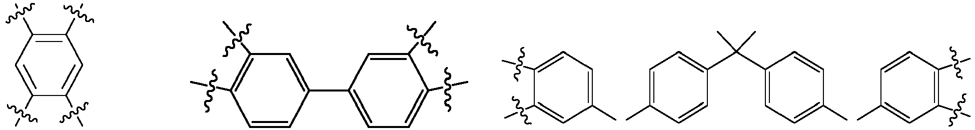

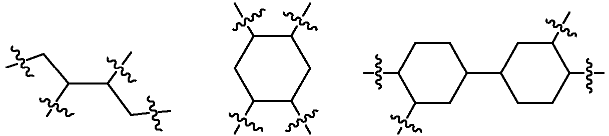

Preferably, R1 is hydrophilic. Preferably, R1 is selected from OH or C1-C4 alkyl, preferably C1-C3 alkyl more preferably C1-C2 alkyl, most preferably C1 alkyl.

R¹ can also be selected from OH, CO₂H, CO₂⁻, SO₃H, SO₃⁻.

Y is a group of structure:

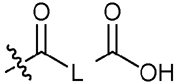

Polymers in which R¹ or R³ is Y can be obtained by reacting the hydroxylated polymer (i.e., where R¹ is H, or R¹ is R² and R³ is H) with a 5- to 6-membered cyclic anhydride, in which the linker between the two carbonyls of the anhydride group becomes L². A variety of 5- to 6-membered cyclic anhydride are readily available.

In some instances, R¹ is H or R², and R³ is H.

In some instances, R¹ is R² or Y, and R³ is Y.

In situations where R¹ is R², each oxygen atom in R² may be bound to its own Y group, or both oxygen atoms in R² may be coordinated to a single Y group, e.g.:

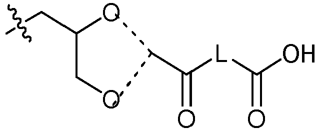

In the case that the main chain is hydrophobic, R¹ may be a mono-, di- or tri-sulphonated or caboxylated aryl group most preferably where the aryl is a phenyl group. This increases the hydrophilicity of the side chain.

Sulfonated and/or sulphated polymers are envisaged. Sulphonated polymers can be prepared using two potential routes. The first is too post-modify the polymers via a sulfonation reaction using reagents such as fuming sulfuric acid, conc sulfuric acid, chlorosulfonic acids, sulfur trioxide or sodium hydrogen sulfate in combination with phosphorus pentoxide which facilitate the introduction of sulfonic acid groups into the polymer chain through electrophilic aromatic substitution. The choice of reagent and the specific conditions used (such as temperature, time, and solvent) will depend on the desired degree of sulfonation and the properties of the polymer being sulfonated. The second route is to prepare the aromatic sulfonated epoxide monomer using reagents like sulfur trioxide (SO3), fuming sulfuric acid or chlorsulfonic acid resulting in an electrophilic aromatic substitution reaction.

An example of an amine-functionalised sulphonated polymer is below.

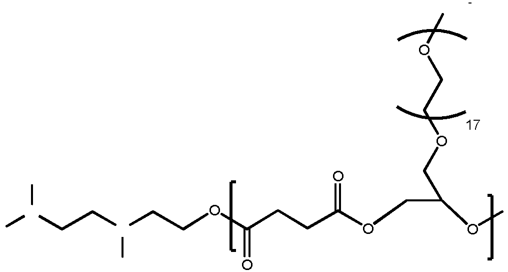

Polymers in which R¹ or R³ is Y can be obtained by reacting the hydroxylated polymer (i.e., where R¹ is H, or R¹ is R² and R³ is H) with a 5- to 6-membered cyclic anhydride, in which the linker between the two carbonyls of the anhydride group becomes L². A variety of 5- to 6-membered cyclic anhydride are readily available.

In some instances, R¹ is H or R², and R³ is H.

In some instances, R¹ is R² or Y, and R³ is Y.

In situations where R¹ is R², each oxygen atom in R² may be bound to its own Y group, or both oxygen atoms in R² may be coordinated to a single Y group, e.g.:

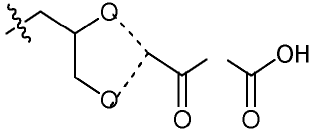

In the case that the main chain is hydrophobic, R¹ may be a mono-, di- or tri-sulphonated or carboxylated aryl group most preferably where the aryl is a phenyl group. This increases the hydrophilicity of the side chain.

Sulfonated aromatics can be prepared using known chemistries. For example, one route post-modifes the polymers described herein via a sulfonation reaction using reagents such as fuming sulfuric acid, concentrated sulfuric acid, chlorosulfonic acids, sulfur trioxide or sodium hydrogen sulfate in combination with phosphorus pentoxide which facilitates the introduction of sulfonic acid groups into the polymer chain through electrophilic aromatic substitution. The choice of reagent and the specific conditions used (such as temperature, time, and solvent) will depend on the desired degree of sulfonation and the properties of the polymer being sulfonated. A second route is to prepare the aromatic sulfonated epoxide monomer using reagents like sulfur trioxide (SO₃), fuming sulfuric acid or chlorosulfonic acid resulting in an electrophilic aromatic substitution reaction.

The polymer may have a molecular weight (Mₙ) as determined by size exclusion chromatography of 0.3 - 500 kg mol ⁻¹, following the procedure described herein. Suitably, the polymer has a molecular weight (Mₙ) as determined by size exclusion chromatography of 0.3 - 30 kg mol ⁻¹. More suitably, the polymer has a molecular weight (Mₙ) as determined by size exclusion chromatography of 0.3 - 20 kg mol ⁻¹. Even more suitably, the polymer has a molecular weight (Mₙ) as determined by size exclusion chromatography of 1.5 - 15 kg mol⁻¹. Yet more suitably, the polymer has a molecular weight (Mₙ) as determined by size exclusion chromatography of 1.5 - 12 kg mol ⁻¹. Most suitably, the polymer has a molecular weight (Mₙ) as determined by size exclusion chromatography of 1.5 - 10 kg mol ⁻¹.

The polymer may have a polydispersity index of ≤2.0 as determined by gel permeation chromatography following the procedure described herein. Suitably, the polymer has a polydispersity index of ≤1.8 as determined by gel permeation chromatography. More suitably, the polymer has a polydispersity index of ≤1.5 as determined by gel permeation chromatography. Even more suitably, the polymer has a polydispersity index of ≤1.3 as determined by gel permeation chromatography.

In some instances, the polymer has a molecular weight (Mₙ) as determined by size exclusion chromatography of 0.5 - 500 kg mol ⁻¹ and a polydispersity index of ≤2.0 as determined by gel permeation chromatography. Suitably, the polymer has a molecular weight (Mₙ) as determined by size exclusion chromatography of 0.5 - 20 kg mol ⁻¹ and/or a polydispersity index of ≤1.5 as determined by gel permeation chromatography. More suitably, the polymer has a molecular weight (Mₙ) as determined by size exclusion chromatography of 1.5 - 10 kg mol ⁻¹ and/or a polydispersity index of ≤1.3 as determined by gel permeation chromatography.

In certain instances, X is X¹, J is O, n is a number 0-3, R¹ is H or Y, and the polymer has a molecular weight (Mₙ) of 0.3 - 30 kg mol⁻¹ and a polydispersity index of ≤1.5. The structure of such polymers may be such that n is 0 and R¹ is H. The properties of such polymers may be such that the molecular weight (Mₙ) is 1.5 - 10 kg mol⁻¹ and the polydispersity index is ≤1.3.

In certain instances, X is X¹, J is O, n is a number 1-3, R¹ is H or Y, and the polymer has a molecular weight (Mₙ) of 0.3 - 15 kg mol⁻¹ and a polydispersity index of ≤1.5. The structure of such polymers may be such that n is 1 and R¹ is H. The properties of such polymers may be such that the molecular weight (Mₙ) is 1.5 - 12 kg mol⁻¹ and the polydispersity index is ≤1.3.

In certain instances, X is X¹, J is O, n is a number 1-3, R¹ is H or Y, and the polymer has a molecular weight (Mₙ) of 0.3 - 10 kg mol⁻¹ and a polydispersity index of ≤1.8 The structure of such polymers may be such that n is 3 and R¹ is H. The properties of such polymers may be such that the molecular weight (Mₙ) is 1.5 - 10 kg mol⁻¹ and the polydispersity index is ≤1.3.

In certain instances, X is X¹, J is O, n is a number 0-3, R¹ is R² or Y, and the polymer has a molecular weight (Mₙ) of 0.3 - 20 kg mol⁻¹ and a polydispersity index of ≤1.5. The structure of such polymers may be such that n is 0 and R¹ is R², wherein R³ is H. The properties of such polymers may be such that the molecular weight (Mₙ) is 1.5 - 15 kg mol⁻¹ (or 1.5 - 10 kg mol⁻¹) and the polydispersity index is ≤1.3.

In certain instances, X is X², J is O, n is a number 1-50, R¹ is H or Y, and the polymer has a molecular weight (Mₙ) of 0.3 - 15 kg mol⁻¹ and a polydispersity index of ≤1.8. The structure of such polymers may be such that n is 1-20 (e.g., 1-15) and R¹ is H, optionally wherein L¹ is: (i) a group L^{1a}, in which two R^{4a} substituents are linked such that when taken together with the atom(s) to which they are attached, they form a 3-7 membered carbocyclic ring or a 6-membered aromatic ring, or (ii) a group L^{1b}, in which V³ and V⁵ are C(R^{4a})ₚ and V⁴ is O. More particularly, L¹ may have a structure: 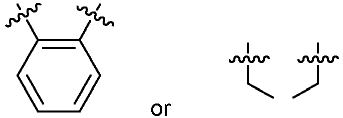 and the properties of the polymer may be such that the molecular weight (Mₙ) is 1.5 - 10 kg mol⁻¹ and the polydispersity index is ≤1.6.

As stated above the polymer may incorporate an end group (eg. B or B') which comprises the or each amine so that the polymer may have a structure according to formula II or III as described above.

Each polymeric chain A suitably has a hydroxy-terminating polymeric backbone.

Polymers of the first aspect can be prepared by ring-opening copolymerisation of CO₂ (or a cyclic anhydride) with an epoxide in the presence of a chain transfer agent (CTA). The basic structure of a CTA will be familiar to those of ordinary skill in the art. Typically the CTA comprises at least one, but up to 25, OH and/or COOH groups that serve as sites for polymeric chain growth. Therefore, B may be a residue of a CTA.

CTAs bearing 3-6 OH and/or COOH groups may therefore be used to prepare star-shaped polymers of the first aspect.

In some instances, B is an amine-containing group (e.g. a residue of an amine-containing CTA).

Where an OH-functionalised CTA has been used, each OH group becomes an ether moiety directly connecting the remainder of the CTA to a polymeric chain A. Therefore, the polymer may have a structure according to formula Ila: 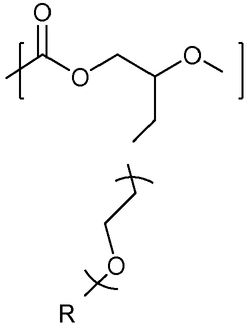 wherein B' is an end group to which each A is attached. It will be understood that the B'-O-moiety represents a deprotonated OH-functionalised CTA.

Where a COOH-functionalised CTA has been used, each COOH group becomes an ester moiety connecting the remainder of the CTA to a polymeric chain A via a linkage derived from the epoxide comonomer.

Therefore, the polymer may have a structure according to formula Ilb: 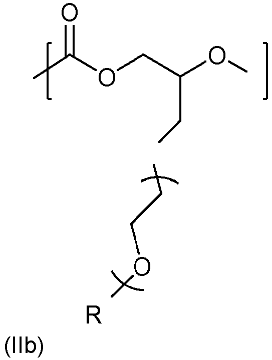
wherein n and R¹ are as defined for formula I; and
B' is an end group to which each A is attached. It will be understood that the B'-C(O)-O-moiety represents a deprotonated COOH-functionalised CTA.

A variety of CTAs may be used to prepare polymers of the first aspect. Particular, non-limiting examples include: 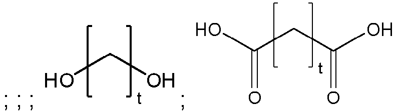 wherein t is a number 1-30, x and y are numbers 1-100 and z is a number 1-4 and further examples: 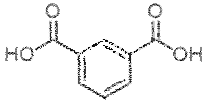 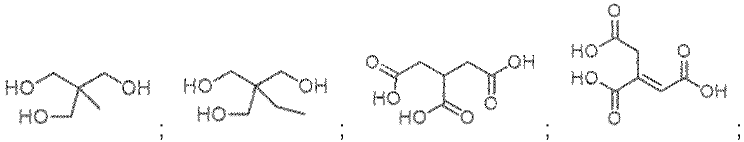 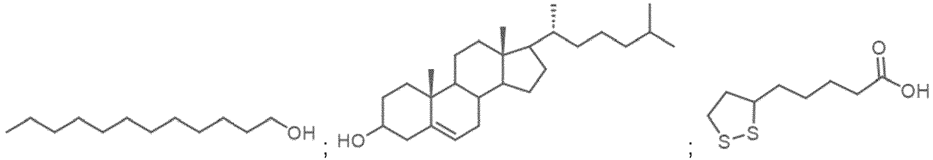 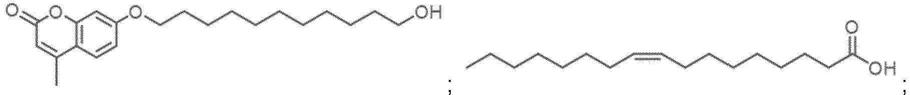 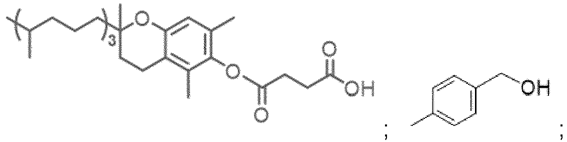 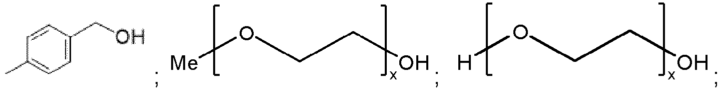 and

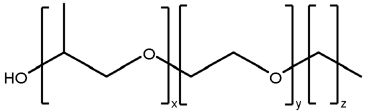

Preferably, the CTA comprise one or more amines, including but not limited to the structures below:

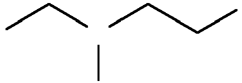

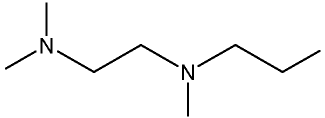

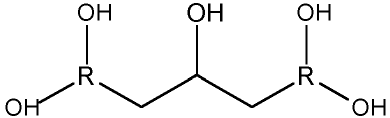

Preferably the CTA has a main chain and one or more side chains. Preferably at least one of the side chains branch from an amine.

Preferably the side chain of the CTA comprises one or more amines. Polymers made with such CTAs have amines on depending side chains in the end group (e.g. B or B'), making them more available to react with soils on the substrate.

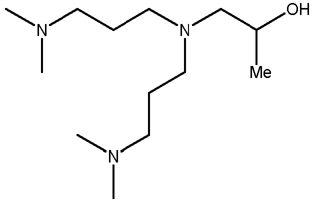

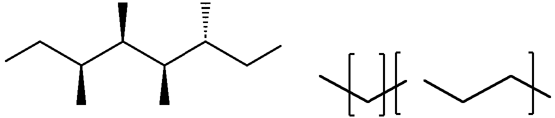

In the case that A is composed of predominantly hydrophilic repeat units according to the choices of X, J, n and R¹ of formula I described abover to enhance its amphiphilicity, the CTA is preferably selected from the more hydrophobic CTAs such that B or B' is, but not limited to, C8-C220 alkyl or alkylene.

In the case that A is composed predominantly of hydrophobic repeat units according to the choices of X, J, n and R¹ of formula I described above, then in order for formula Ila or IIb to be a surfactant or in order to enhance its surfactancy, the CTA is preferably selected from the more hydrophilic CTA's such that B or B' is a mono-functional (i.e. e = 1) polyalkylene glycol R⁸O(CH₂CH₂O)ₓ(CH₂CHR⁹)_{y} where R⁸ is selected from H, a C1-C4 alkyl, or a sulphonate, or Y, and where x is 1-100 and y is 1-100 and R⁹ is H or a C1-C4 alkyl or B' is a polyfunctional (i.e. e = 2-6) polyethylene glycol. Particular non-limited polyfunctional structures include:

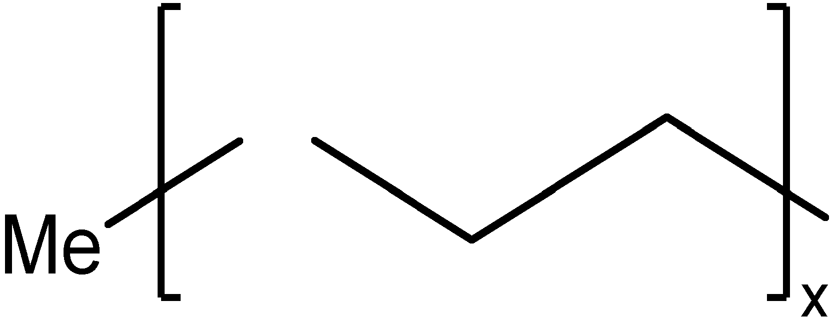

In the non-limiting examples of CTAs outlined above, it will be understood that OH and COOH moieties serve as sites for growth of polymeric chains A. Non-limiting examples of B and B' will therefore be apparent from the foregoing discussion.

At least 25% of the repeating units within the polymer may have a structure according to formula I. Suitably, at least 50% of the repeating units within the polymer have a structure according to formula I. More suitably, at least 75% of the repeating units within the polymer have a structure according to formula I. Even more suitably, at least 85% of the repeating units within the polymer have a structure according to formula I. Yet even more suitably, at least 95% of the repeating units within the polymer have a structure according to formula I. In many instances, all repeating units within the polymer have a structure according to formula I. It will be understood that crosslinking moieties, as discussed hereinbefore, when present, are not to be interpreted as repeating units.

Precursors for polymers of the first aspect may also be polymeric. The precursors may be identical in structure to the polymers of the first aspect, except that terminal oxygen atoms in the side chain of the repeating unit are protected by a group that can be readily cleaved to yield the hydroxylated analogue, So, R¹ is a protecting group or has a structure according to R², in which each R³ is a protecting group or the R³ groups are linked to form a single protecting group.

A variety of protecting groups cleavable (e.g., hydrolysable) from the R¹ or R³ positions to form hydroxy groups will be readily familiar to one of ordinary skill in the art. Purely for illustrative purposes, particular, non-limiting examples of R¹ and R² include:

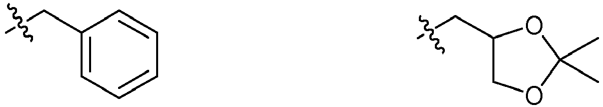

Aside from the aforementioned differences at the R¹ and R² positions, the polymer precursors may have any of those structures outlined hereinbefore in relation to the first aspect. Similarly, the properties (e.g., molecular weight and/or polydispersity index) discussed hereinbefore in relation to the first aspect may also apply to the polymer precursors. The polymer surfactant of the invention in its various aspects and preferred / optional features as described herein, may be present from 0.1 wt%, preferably from 1%wt, more preferably from 2%wt, even more preferably from 4%wt, still more preferably from 6 wt%, yet more preferably from 10% of the composition, based on the total weight of the composition. The polymer surfactant may be present at no more than 60%wt, preferably no more than 50%wt, more preferably no more than 40%wt, still more preferably no more than 30%wt, yet more preferably than 20%wt of the composition, based on the total weight of the composition.

### Ethoxylation and PEGylation

Throughout this spec, where we talk about PEG, the PEG chain may be introduced by PEGlyation (attaching e.g. grafting a PEG chain to the polymer or by means of a monomer used to make the polymer, said monomer already incorporating a PEG chain) or by ethoxylation (chain growth).

### Definitions

The following terms, as used here are defined below:

Throughout the entirety of the description and claims of this specification, where subject matter is described herein using the term "comprise" (or "comprises" or "comprising"), the same subject matter instead described using the term "consist of" (or "consists of" or "consisting of") or "consist essentially of" (or "consists essentially of" or "consisting essentially of") is also contemplated. For example, in terms of repeating units, the polymer of the first aspect may consist of, or consist essentially of, repeating units of formula I. But equally the polymer may comprise further components (such as B and B' as herein described). It will be understood that the polymer of the first aspect may contain more than one repeating unit of formula I. For example, the polymer may comprise, consist of, or consist essentially of a first repeating unit of formula I and a second repeating unit of formula I, where the first and second repeating units of formula I are different. For example, X² may be different in the first and second repeating units of formula I (e.g., the polymer may be formed from one epoxide and two different cyclic anhydrides). Alternatively, R¹ may be different in the first and second repeating units of formula I (e.g., the polymer may be formed from one cyclic anhydride and two different epoxides).

Throughout the description and claims of this specification, the singular encompasses the plural unless the context otherwise requires. In particular, where the indefinite article is used, the specification is to be understood as contemplating plurality as well as singularity, unless the context requires otherwise.

Features described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any of the specific embodiments recited herein. The invention extends to any novel one, or any novel combination, of the features disclosed in this specification (including any accompanying claims, abstract and drawings), or to any novel one, or any novel combination, of the steps of any method or process so disclosed.

"(m-nC)" or "(m-nC) group" used alone or as a prefix, refers to any group having m to n carbon atoms.

"**alkyl**" as used herein refers to straight or branched chain alkyl moieties.

"**alkenyl**" as used herein refers to straight or branched chain alkenyl moieties, typically having 1, 2, 3, 4, 5 or 6 carbon atoms. The term includes reference to alkenyl moieties containing 1, 2 or 3 carbon-carbon double bonds (C=C). This term includes reference to groups such as ethenyl (vinyl), propenyl (allyl), butenyl, pentenyl and hexenyl, as well as both the *cis* and *trans* isomers thereof.

"**alkylidene**" as used herein refers to straight or branched chain alkylidene moieties. Most suitably, alkylidene is methylidene.

"**alkynyl**" as used herein refers to straight or branched chain alkynyl moieties, typically having 1, 2, 3, 4, 5 or 6 carbon atoms. The term includes reference to alkynyl moieties containing 1, 2 or 3 carbon-carbon triple bonds (C≡C). This term includes reference to groups such as ethynyl, propynyl, butynyl, pentynyl and hexynyl.

"**alkoxy**" as used herein refers to -O-alkyl, wherein alkyl is a straight or branched chain and comprises 1, 2, 3, 4, 5 or 6 carbon atoms. In one class of embodiments, alkoxy has 1, 2, 3 or 4 carbon atoms. This term includes reference to groups such as methoxy, ethoxy, propoxy, isopropoxy, butoxy, tert-butoxy, pentoxy, hexoxy and the like.

"**aryl**" or "**aromatic**" as used herein means an aromatic ring system comprising 6, 7, 8, 9 or 10 ring carbon atoms. Aryl is often phenyl but may be a polycyclic ring system, having two or more rings, at least one of which is aromatic. This term includes reference to groups such as phenyl, naphthyl and the like.

"**carbocyclyl**", "**carbocyclic**" or "**carbocycle**" means a non-aromatic saturated or partially saturated monocyclic, or bridged bicyclic, ring system(s).

"**halogen**" or "**halo**" as used herein refers to F, Cl, Br or I. In a particular, halogen may be F or Cl, of which Cl is more common.

"**substituted**" as used herein in reference to a moiety means that one or more, especially up to 5. Preferably, "substituted" as used herein in reference to a moiety means that 1, 2 or 3, of the hydrogen atoms in said moiety are replaced independently of each other by the corresponding number of the described substituents. Even more preferred, "substituted" as used herein in reference to a moiety means that 1 or 2, of the hydrogen atoms in said moiety are replaced independently of each other by the corresponding number of the described substituents. The term "optionally substituted" as used herein means substituted or unsubstituted.

It will, of course, be understood that substituents are only at positions where they are chemically possible, the person skilled in the art being able to decide (either experimentally or theoretically) without inappropriate effort whether a particular substitution is possible.

"**detergent composition**" in the context of this invention means cleaning compositions, generally containing detersive surfactants, optionally other treatment ingredients, intended for and capable of treating substrates as defined herein.

"**detersive surfactant**" in the context of this invention denotes a surfactant which provides a detersive (i.e. cleaning) effect to a substrate such as fabric treated as part of a domestic treatment e.g.laundering process or dishwashing process or hard surface washing process.

"**laundry detergent**" in the context of this invention denotes formulated compositions intended for and capable of wetting and cleaning domestic laundry such as clothing, linens and other household textiles. Examples of liquid laundry detergents include heavy-duty liquid laundry detergents for use in the wash cycle of automatic washing machines, as well as liquid fine wash and liquid colour care detergents such as those suitable for washing delicate garments (e.g. those made of silk or wool) either by hand or in the wash cycle of automatic washing machines. In some embodiments the composition is handwash detergents which involve the consumer using their hands to wash substrates. Fields of use principally involve laundry use (i.e. the hand washing of clothes) and hand dishwash (i.e. the hand washing of dishes and the like). Handwash detergents involve intimate contact of the detergent liquor with the hands during the washing process, whether in laundry or hand dishwash. Laundry detergent composition is particularly preferred.

"**liquid**" in the context of this invention denotes that a continuous phase or predominant part of the composition is liquid and that the composition is flowable at 15°C and above. Accordingly, the term "liquid" may encompass emulsions, suspensions, and compositions having flowable yet stiffer consistency, known as gels or pastes.

The viscosity of laundry liquid compositions of the invention is preferably from 1 to about 10,000 mPa.s at 25°C, more preferably from 200 to 1,500 mPa·s, at a shear rate of 21 sec⁻¹ by a HAAKE Viscometer. This shear rate is the shear rate that is usually exerted on the liquid when poured from a bottle.

In hard surface cleaning compositions of the invention, the viscosity is preferably from1 to 1000 mPa.s @ 20 s-1, at 25°C. The viscosity is measured using an AR 1000 Rheometer (TA instruments) using a 4 cm, 2° cone-plate geometry @ 20 s-1 and 25°C. Depending on the required use characteristics the composition may be more or less viscous. For example, a more water thin viscosity is desired if the composition is to be used in a trigger spray bottle. If dispensed from a squeeze bottle, a more viscous consistency may be desired. A more viscous viscosity may also be desired if the cleaning product is a toilet cleaning product. Preferably the composition has a viscosity of 100 to 700 mPa.s @ 20 s-1 and more preferably of 200 to 600 mPa.s @ 20 s-1. The desired viscosity can suitably be obtained by known methods like for example the use of a viscosity modifying agent. Water levels depend on the level of total surfactant and is adjusted accordingly.

"**Solid**" in the context of a detergent composition refers to the ability of an article to substantially retain its shape (i e., without any visible change in its shape) at 20°C and under the atmospheric pressure, when it is not confined and when no external force is applied thereto.

"**Polymer**" refers to a molecule composed of more than 2 repeating units typically connected by covalent chemical bonds. The polymer may be a homopolymer, copolymer, terpolymer etc. Co-polymers include alternating, random or block copolymers. In this specification, "polymer" includes oligomers which are small polymers of 2 or more, preferably 2 to 4 repeat units.

"**substantially free of**" **or "substantially free from"** refers to either the complete absence of an ingredient or a minimal amount thereof merely as impurity or unintended byproduct of another ingredient. A composition that is "substantially free" of/from a component means that the composition comprises less than 0.5%, 0.25%, 0.1%, 0.05%, or 0.01%, or even 0%, by weight of the composition, of the component.

"**Substrate**" preferably is any suitable substrate of the home and includes but is not limited to any inanimate substrate such as a fabric as defined herein or a household surface, and dishes also defined herein. Fabric includes clothing, linens and other household textiles etc. In the context of fabrics, wherein the term "**linen**" is used to describe certain types of laundry items including bed sheets, pillow cases, towels, tablecloths, table napkins and uniforms and the term "textiles" can include woven fabrics, non-woven fabrics, and knitted fabrics and fabrics can include natural or synthetic fibres such as silk fibres, linen fibres, cotton fibres, polyester fibres, polyamide fibres such as nylon, rayon, acrylic fibres, acetate fibres, and blends thereof including cotton and polyester blends, and fabrics which are elastic and/or contain elastane. "**Dishes**" is meant generically and encompasses essentially any items which may be found in a dishwashing load, including crockery chinaware, glassware, plasticware, hollowware and cutlery, including silverware." and **"household hard surface"** means any kind of surface typically found in and around houses like kitchens, bathrooms, e.g., floors, walls, tiles, windows, cupboards, sinks, showers, shower plastified curtains, wash basins, WCs, fixtures and fittings and the like made of different materials like ceramic, vinyl, no-wax vinyl, linoleum, melamine, glass, Inox^{®}, Formica^{®}, vitroceramic, any plastics, plastified wood, metal or any painted or varnished or sealed surface and the like; as well as household appliances including, but not limited to refrigerators, freezers, washing machines, automatic dryers, ovens, microwave ovens, dishwashers and so on. Such hard surfaces may be found both in private households as well as in commercial, institutional and industrial environments.

**"home care composition"** Home care compositions are typically suitable for: (a) the care of finished textiles, cleaning of finished textiles, sanitization of finished textiles, disinfection of finished textiles, detergents, stain removers, softeners, fabric enhancers, stain removal or finished textiles treatments, pre and post wash treatments, washing machine cleaning and maintenance, with finished textiles intended to include garments and items made of cloth; (b) the care of dishes, glasses, crockery, cooking pots, pans, utensils, cutlery and the like in automatic, in-machine washing, including detergents, preparatory post treatment and machine cleaning and maintenance products for both the dishwasher, the utilized water and its contents; or (c) manual hand dish washing detergents; and means any type of treatment composition for home care substrates and may include, but are not limited to, liquid cleaning and disinfecting agents laundry cleaning compositions, fabric softening compositions, fabric enhancing compositions, fabric freshening compositions, laundry pre-treatment or pre-washing compositions, laundry pretreating compositions, laundry additives (e.g., rinse additives, wash additives, etc.), post-rinse fabric treatment compositions, dryer compositions, dry cleaning compositions, ironing aid, dish washing compositions, as well as cleaning auxiliaries such as bleach additives rinse aid formulations, hard surface cleaning compositions including hard surface cleaners for kitchens and bathrooms and other suitable compositions that may be apparent to one skilled in the art in view of the teachings herein. All of such products which are applicable may be in standard, concentrated or even highly concentrated form even to the extent that such products may in certain aspect be non-aqueous.

**"Surfactant"** surfactants are chemical compounds that decrease the surface tension or interfacial tension between two liquids and/or a liquid and a gas, and/or a liquid and a solid. As they consist of a hydrophobic portion and a hydrophilic portion, this enables water and oil to mix; they can form foam and facilitate the detachment of dirt. Surfactants may be used as detergents and cleaning agents, emulsifiers, wetting agents, foaming agents, antistatic additives, or dispersants, thickeners, and/or binders or any combination thereof.

**"Treatment"** in the context of treating substrates may include wetting, applying a foam, cleaning, washing, conditioning, lubricating, care, softening, easy-ironing, anti-static, anti-wrinkle, fragrancing, de-pilling, rejuvenation including colour rejuvenation, soaking, pretreatment of substrates, bleaching, colour treatments, soil removal, stain removal and any combination thereof.

**"Unit dose"** means an amount of composition suitable to treat one load of laundry, such as, for example, from about 0.05 g to about 100 g, or from 10 g to about 60 g, or from about 20 g to about 40 g. A unit dose product may be in the form of a polymeric film package containing the composition, the package may be referred to as a capsule or pouch. Suitable films are available from MonoSol, LLC (Indiana, USA).

**"Water-soluble"** means the article (film or package) dissolves in water at 20° C.

Unless otherwise noted, all component or composition levels are in reference to the active portion of that component or composition, and are exclusive of impurities, for example, residual solvents or by-products, which may be present in commercially available sources of such components or compositions.

Dimensions and values disclosed herein are not to be understood as being strictly limited to the exact numerical values recited. Instead, unless otherwise specified, each such dimension is intended to mean both the recited value and a functionally equivalent range surrounding that value. Accordingly except in the examples and comparative experiments, or where otherwise explicitly indicated, all numbers are to be understood as modified by the word **"about".** For example, a value disclosed as "50 microns' is intended to mean "about 50 microns."

Unless otherwise noted, all component or composition levels are in reference to the active portion of that component or composition, and are exclusive of impurities, for example, residual solvents or by-products, which may be present in commercially available sources of such components or compositions.

All amounts are by weight of the final composition, unless otherwise specified. It should be noted that in specifying any ranges of values, any particular upper value can be associated with any particular lower value. Unless specified otherwise, amounts as used herein are expressed in percentage by weight based on the total weight of the composition and is abbreviated as "wt%" or "weight %".

All conditions herein are at 20° C. and under the atmospheric pressure, unless otherwise specifically stated.

All polymer **molecular weights (Mn)** are determined by **number average molecular weight** unless otherwise specifically noted. All polymer **molecular weights (Mw)** are determined by **weight average molecular weight** unless otherwise specifically noted.

Numerical ranges expressed in the format "from x to y" are understood to include x and y. When for a specific feature multiple preferred ranges are described in the format "from x to y", it is understood that all ranges combining the different endpoints are also contemplated. In specifying any range of values or amounts, any particular upper value or amount can be associated with any particular lower value or amount.

**Home Care Compositions**

The home care composition of the present invention may be in any suitable form, for example, a solid such as a powder or granulate or other particulate and a shaped solid, or a liquid. Preferably, the composition is a liquid composition. Also preferred are solid compositions.

Compositions may be provided as unit doses. Compositions may be concentrated or dilute.

Liquid compositions may contain from 10-80wt% water but this is dependent on the level of surfactant.

Compositions, such as hard surface cleaning compositions may be aqueous that is to say, the composition comprises water. The amount of water will depend on the desired concentration of the other ingredients but will at least be 75 wt%, like for example at least 85 wt% or at least 90 wt%, but typically not more than 99 wt%. The amount of water preferably is from 80 to 99 wt%, more preferably 80 to 95 wt% and even more preferably 85 to 95 wt%.

A "concentrated" liquid composition refers to a composition comprising up to 50% by weight of water, for example up to 40%, up to 30% or up to 20%, based on total weight of the composition. Preferably the composition of the present invention is a "dilute" composition. A "dilute" composition refers to a composition comprising greater than 50% by weight of water, for example greater than 60%, greater than 70% or greater than 80%.

Preferably the composition is a detergent composition.

### Further surfactants

Compositions of the invention may include further surfactants which may be selected from anionic surfactants, non-ionic surfactants, cationic surfactants, amphoteric surfactant or mixtures thereof, preferably anionic surfactants and/or non-ionic surfactants or mixtures thereof. Compositions of the invention preferably comprises from 0.1 % to 70%, more preferably 2 to 60%wt, from 1% to 50% or from 5% to about 40% or from 4 to 30 wt. %. total surfactant (polymeric surfactant in claim plus any further surfactant) based on the total weight of the composition.

The further surfactants are described below.

### Anionic surfactant

Compositions of the present invention preferably comprise an anionic surfactant selected from alkyl sulfate, alkyl ether sulfate, soap, alkyl sulfonate, alkaryl sulfonate, alpha-olefin sulfonate, alkyl isethionate, alkyl succinate, alkyl sulphosuccinate, alkyl ether sulphosuccinate, N-alkyl sarcosinate, alkyl phosphate, alkyl ether phosphate, alkyl ether carboxylic acid or mixtures thereof. Suitable anionic surfactants also include their corresponding salts, especially their sodium, potassium, calcium, magnesium, ammonium and mono-, di-, and triethanolamine salts. The alkyl radicals generally contain from 8 to 18, preferably from 10 to 18 carbon atoms and may be unsaturated. The alkyl ether sulfates, alkyl ether sulphosuccinates, alkyl ether phosphates and alkyl ether carboxylic acids and salts thereof may contain from 1 to 20 ethylene oxide or propylene oxide units per molecule.

Preferably the anionic surfactant is selected from alkyl sulfate, alkyl ether sulfate, soap and mixtures thereof, more preferably the anionic surfactant is selected from alkyl sulfate, alkyl ether sulfate and mixtures thereof. Most preferably the anionic surfactant comprises or is alkyl ether sulfate.

### Alkyl ether sulfates

Alkyl ether sulfate is an anionic surfactant having a formula RO(CH₂CH₂O)ₙSO₃M, wherein R is a linear or branched, alkyl or alkenyl group having 8 to 18 carbon atoms, preferably 10 to 18 carbon atoms, more preferably 12 to 14 carbon atoms; M is a positively charged ion comprising sodium, potassium, calcium, magnesium, ammonium, monoethanolamine, diethanolamine, triethanolamine or mixtures thereof, preferably sodium, potassium or mixtures thereof; n is the degree of ethoxylation of from 0.5 to 3, preferably from 1 to 3. A preferred example is sodium lauryl ether sulfate (SLES) in which the predominantly C₁₂ lauryl alkyl group has been ethoxylated with an average of 2EO units per molecule.

Preferably, the alkyl sulfate has an alkyl group having 8 to 18 carbon atoms, more preferably from 10 to 18 carbon atoms, even more preferably from 10 to 16 carbon atoms.. The alkyl group may be liner or branched, but is preferably linear.

Preferably, the alkyl sulfate comprises a salt of an alkyl sulfate, comprising a positively charged ion and a negatively alkyl sulfate moiety. The positively charged ion may be a metal ion such as sodium, potassium or magnesium; or an ammoniacal ion such as ammonium, monoethanolamine, diethanolamine or triethanolamine or any mixture thereof e.gsodium and potassium.

It is preferred that the alkyl sulfate comprises sodium, potassium, calcium, magnesium, ammonium or ethanolamine salts of alkyl sulfate having 8 to 18 carbon atoms, more preferably 10 to 18 carbon atoms, even more preferably from 10 to 16 carbon atoms. Illustrative yet non-limiting examples of alkyl sulfates include sodium lauryl sulfate (also known as sodium dodecyl sulfate), ammonium lauryl sulfate, diethanolamine (DEA) lauryl sulfate. Suitable examples also include alkyl sulfates commercially available from natural source with trade names Galaxy 689, Galaxy 780, Galaxy 789, Galaxy 799 SP, and Ufarol TCL 92N and from synthetic origin with trade names Safol 23, Dobanol 23A or 23S, Lial 123 S, Alfol 1412S, Empicol LC3, Empicol 075SR.

Sodium lauryl sulfate (SLS), also known as sodium dodecyl sulfate, is particularly preferred as the alkyl sulfate.

The term "soap" as used herein, means the alkali metal or alkanol ammonium salts of aliphatic, alkanes, or alkene monocarboxylic acids. Preferred monocarboxylic acids are fatty acids with 6 to 22 carbon atoms, more preferably from 12 to 18 carbon atoms. Examples of suitable soap include, but not limited to, sodium, potassium, calcium, magnesium, ammonium, monoethanolamine, diethanolamine, triethanolamine salts of lauric acid, myristic acid, palmitic acid, stearic acid, (hydrogenated) erucic acid, behenic acid, coconut oil fatty acid, palm oil fatty acid, palm kernel oil fatty acid, olive oil fatty acid, tallow fatty acid or mixtures thereof. The fatty acids may be saturated or unsaturated, linear or branched. It is particularly preferred that the soap comprises sodium or potassium salts of coconut fatty acid, palm kernel oil fatty acid or mixtures thereof.

### Alkyl aryl sulphonate surfactants

Preferably the alkyl aryl sulphonate surfactant comprises a sulphonate surfactant wherein the alkyl group comprises from C10 to C22 alkyl group. More preferably where the aryl group is benzene. The alkyl aryl sulphonate surfactant may be linear or branched, saturated or unsaturated and mixtures thereof.

More preferably the alkyl aryl sulphonate surfactant has a linear alkyl group comprising from C10 to C22 alkyl group, more preferably from C10 to C18 alkyl group, more preferably from C10 to C16 alkyl group still more preferably from C10 to C13 alkyl group.

Preferably the sulphonate surfactant is an alkyl benzene sulphonate surfactant. Preferably the alkyl chain in the alkyl benzene sulphonate is straight or branched, more preferably linear.

Preferably the sulphonate surfactant is a linear alkyl benzene sulphonate with a C10 to C18 alkyl group, still preferably C10 to C14 alkyl group and most preferably C10 to C13 linear alkyl benzene sulphonate. Preferably the higher linear alkyl benzene sulfonate is a sodium alkylbenzene sulfonate surfactant (LAS), which preferably has a straight chain alkyl radical of average length of about 11 to 13 carbon atoms. Suitable alkyl benzene sulphonate (LAS) is obtainable, preferably obtained, by sulphonating commercially available linear alkyl benzene (LAB); suitable LAB includes low 2-phenyl LAB, other suitable LAB includes high 2-phenyl LAB, such as those supplied by Sasol under the tradename Hyblene^{®}.

Preferably C10 to C15 alkyl benzene sulfonates (LAS), still preferably C10 to C14 alkyl benzene sulfonates (LAS), still preferably the benzene sulfonate (LAS) has at least 50 wt.% of C12 alkyl benzene sulfonate, still preferably 80 wt.% C12 alkyl benzene sulfonates. The alkyl benzene sulphonate is preferably in the salt form with the cation selected from alkali metal, alkaline earth metal or alkanolamine. Preferably alkali metal selected from sodium or potassium, most preferably sodium.

Examples of alkylbenzene sulfonates include sodium salt of linear alkylbenzene sulphonate, alkyl toluene sulphonate, alkyl xylene sulphonate, alkyl phenol sulphonate, alkyl naphthalene-sulphonate, ammonium diamylnaphthalene-sulphonate and sodium dinonylnaphthalene-sulphonate and mixtures with olefin sulphonates.

Preferably the laundry detergent composition includes from 1 wt.% to 25 wt.% alkyl aryl sulphonate surfactant. More preferably the alkyl aryl sulphonate surfactant is linear alkyl benzene sulphonate surfactant. Preferably the amount of linear alkyl benzene sulphonate surfactant ranges from 1 wt.% to 20 wt.%, still preferably from 2 wt.% to 20 wt.%, more preferably 7 wt.% to 20 wt.%, even more preferably 8 wt.% to 20 wt.%, still more preferably from 10 wt.% to 20 wt.%. Still preferably the amount of linear alkyl benzene sulphonate surfactant is preferably in an amount ranging from 1 wt.% to 25 wt.%, still preferably from 1 wt.% to 20 wt.%, more preferably 2 wt.% to 20 wt.%, still more preferably from 8 wt.% to 20wt.%. Preferably the amount of linear alkyl benzene sulphonate surfactant in the solid laundry detergent composition is not less than 1 wt.%, still preferably not less than 2 wt.%, more preferably not less than 5 wt.%, still more preferably not less than 8 wt.%, but typically not more than 20 wt.%, preferably not more than 18 wt.% or still preferably not more than 16 wt.%.

The composition may comprise biosurfactants such as sophorolipids or rhamnolipids, preferably mono-rhamnolipids or di-rhamnolipids or mixtures thereof.

The composition of the present invention preferably comprises at total of from 0.1 to 30% by weight of anionic surfactant (all anionic surfactant present, including any anionic surfactant of the invention), more preferably from 0.5 to 20%, even more preferably from 1 to 15% and most preferably from 2 to 10%, based on total weight of the composition and including all ranges subsumed therein.

### Non-ionic Surfactant

The composition of the invention preferably includes non-ionic surfactant.

A preferred class of non-ionic surfactant for use in the present invention includes C₈ to C₁₈ alkyl alcohol ethoxylates, more preferably C₁₂ to C₁₅ primary linear alcohol ethoxylates with an average of from 3 to 20, more preferably from 3 to 10 moles of ethylene oxide per mole of alcohol. Particularly preferred are lauryl alcohol condensed with 3, 5, 7 and 9 moles of EO (AEO-3, AEO-5, AEO-7 and AEO-9). A further preferred non-ionic surfactant are the C16/18 Alcohol ethoxylates.

Another preferred class of non-ionic surfactant is alkoxylated glycerol esters. The alkoxylated glycerol ester is represented by the following formula:

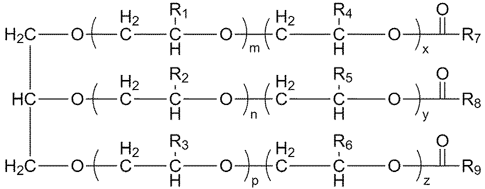

Wherein each of R₁ to R₆ is independently a hydrogen or a methyl group; each of R₇ to R₉ is independently a linear or branched, alkyl or alkenyl group having 5 to 30 carbon atoms, preferably from 8 to 22 carbon atoms, more preferably from 10 to 18 carbon atoms; m, n, p, x, y, or z is independently a number of from 1 to 30, preferably from 5 to 25 and more preferably from 12 to 21. The sum of m, n, p, x, y, z being in the range of 3 to 90.

Preferably, the alkoxylated glycerol ester comprises coconut fatty acid esters, palm oil fatty acid esters or mixtures thereof, most preferably palm kernel oil ethoxylates e.g. SOE-N-60 from Sinolight Surfactant Technology Co., Ltd. Other suitable alkoxylated glyceryl esters are commercially available from Kao under the Levenol brand name. Variants such as Levenol F-200 which has an average EO of 6 and a molar ratio between glycerol and coco fatty acid of 0.55, Levenol V501/2 which has an average EO of 17 and a molar ratio between glycerol and coco fatty acid of 1.5 and Levenol C201 which is also known as glycereth-17 cocoate.

### Methyl ester ethoxylates

Another preferred class of non-ionic surfactant is methyl ester ethoxylates (MEE). Methyl ester ethoxylate surfactant is of the form: R3(-C=O)-O-(CH2CH2-O)n-CH3

Where R3COO is a fatty acid moiety, such as oleic, stearic, palmitic. Fatty acid nomenclature is to describe the fatty acid by 2 numbers A:B where A is the number of carbons in the fatty acid and B is the number of double bonds it contains. For example oleic is 18:1, stearic is 18:0 and palmitic 16:0. The position of the double bond on the chain may be given in brackets, 18:1(9) for oleic, 18:2 (9,12) for linoleic where 9 if the number of carbons from the COOH end. The integer n is the mole average number of ethoxylates.

Methyl ester ethoxylates (MEE) are described in chapter 8 of Biobased Surfactants (Second Edition) Synthesis, Properties, and Applications Pages 287-301 (AOCS press 2019) by G.A. Smith; J.Am.Oil. Chem.Soc. vol 74 (1997) page 847-859 by Cox M.E. and Weerasooriva U; Tenside Surf.Det. vol 28 (2001) page by 72-80 by Hreczuch et al; by C. Kolano. Household and Personal Care Today (2012) page 52-55; J.Am.Oil. Chem.Soc. vol 72 (1995) page 781-784 by A.Hama et al. MEE may be produced the reaction of methyl ester with ethylene oxide, using catalysts based on calcium or magnesium. The catalyst may be removed or left in the MEE.

The methyl ester ethoxylate preferably has a mole average of from 8 to 13 ethoxylate groups (EO). The most preferred ethoxylate has a mol average of from 9 to 11EO, even more preferably 10EO. When the MEE has a mole average of 10EO then at least 10 wt.% of the MEE should consist of ethoxylate with 9, 10 and 11 ethoxylate groups.

In the context of the wider MEE contribution, it is preferred that at least 40 wt.% of the total MEE in the composition is C18:1. In addition, it is preferred that the MEE component also comprises some C16 MEE. Accordingly, it is preferred that the total MEE component comprises from 5 to 50wt.% total MEE, C16 MEE. Preferably the C16 MEE is greater than 90wt.%, more preferably greater than 95wt.% C16:0.

Further, it is preferred that the total MEE component comprises less than 15 wt.%, more preferably less than 10 wt.%, most preferably less than 5 wt.% total MEE of polyunsaturated C18, i.e. C18:2 and C18:3. Preferably C18:3 is present at less than 1 wt.%, more preferably less than 0.5 wt.%, most preferably essentially absent. The levels of polyunsaturation may be controlled by distillation, fractionation or partial hydrogenation of the raw materials (triglyceride or methyl ester) or of the MEE. Further, it is preferred that the C18:0 component is less than 10wt. % by weight of the total MEE present.

Further, it is preferred that the components with carbon chains of 15 or shorter comprise less than 4wt% by weight of the total MEE present.

A particularly preferred MEE has 2 to 26 wt.% of the MEE C16:0 chains, 1 to 10 wt.% C18:0 chains, 50 to 85 wt.% C18:1 chains and 1 to 12 wt.% C18:2 chains.

Preferred sources for the alkyl groups for the MEE include methyl ester derived from distilled palm oil and distilled high oleic methyl ester derived from palm kernel oil, partially hydrogenated methyl ester of low euric rapeseed oil, methyl ester of high oleic sunflower oil, methyl ester of high oleic safflower oil and methyl ester of high oleic soybean oil. High Oleic oils are available from DuPont (Plenish high oleice soybean oil), Monsanto (Visitive Gold Soybean oil), Dow (Omega-9 Canola oil, Omega-9 sunflower oil), the National Sunflower Association and Oilseeds International.

Preferably the double bonds in the MEE are greater than 80 wt.% in the cis configuration. Preferably the 18:1 component is oleic. Preferably the 18:2 component is linoleic. The methyl group of the methyl ester may be replaced by an ethyl or propyl group. Methyl is most preferred.

Non-ionic surfactants also present may include fatty acid amides, alky poly glycosides (APGs)

Mixtures of two or more of the above non-ionic surfactants can be used. If included, non-ionic surfactant is preferably present at a total (i.e. including any non-ionic surfactant of the invention) level from 0.01 to 30%, more preferably from 0.1 to 20% and most preferably from 1 to 10%, based on total weight of the composition and including all ranges subsumed therein.

### Cationic Surfactants

The composition may also comprise cationic surfactant. Preferred cationic surfactant comprises an alkyl chain C10 to 24 carbon atoms . Preferred cationic surfactants include C8 to C18 alkyl dimethyl ammonium halides and derivatives thereof in which one or two hydroxyethyl groups replace one or two of the methyl groups, and mixtures thereof and/or those described in detail in U.S. Patent No. 4,497,718 hereby incorporated by reference and/or also quaternary ammonium compounds or any mixture thereof.

### Amphoteric Surfactants

The composition may also comprise amphoteric surfactant, e.g. selected from alkyl amine oxides, alkyl betaines, alkyl amidopropyl betaines, alkyl sulfobetaines (sultaines), alkyl glycinates, alkyl carboxyglycinates, alkyl amphoacetates, alkyl amphopropionates, alkylamphoglycinates, alkyl amidopropyl hydroxysultaines, acyl taurates and acyl glutamates, having alkyl radicals containing from about 8 to about 22 carbon atoms, the term "alkyl" being used to include the alkyl portion of higher acyl radicals.

Preferred alkyl amine oxides are alkyl dimethyl amine oxide and alkyl amido propyl dimethyl amine oxide, more preferably alkyl dimethyl amine oxide. Especially preferred are lauryl dimethylamine oxide, coco dimethyl amine oxide and coco amido propyl dimethyl amine oxide.

Preferred alkyl betaines include alkyl betaine, alkyl amido betaine, alkyl amidopropyl betaine, alkyl sulphobetaine and alkyl phosphobetaine, wherein the alkyl groups preferably have from 8 to 19 carbon atoms. Examples include cocodimethyl sulphopropyl betaine, cetyl betaine, laurylamidopropyl betaine, caprylate/caprate betaine, capryl/capramidopropyl betaine, cocamidopropyl hydroxysultaine, cocobutyramido hydroxysultaine, and preferably lauryl betaine, cocamidopropyl betaine and sodium cocamphopropionate. Preferably the betaine is cocamidopropyl betaine (CAPB).

In certain embodiments, amphoteric surfactant (including amphoteric surfactant provided by the surfactant of the invention) is present at less than 5%wt, preferably 0%wt.

In certain embodiments, e.g. liquid laundry detergent compositions, cationic surfactant is present at less than 5%wt, preferably 0%wt.

In certain embodiments, e.g. fabric softening compositions, anionic surfactant is present at less than 5%wt, preferably 0%wt.

Some compositions e.g. hard surface cleaning compositions may be free from anionic surfactant, e.g. cationic actives e.g. quaternary ammonium compounds.

The composition may comprise a fabric softening active e.g. polymeric materials or other softeners including quaternary ammonium compounds, silicone polymers, polysaccharides, clays, amines, fatty esters, fatty N-oxides, dispersible polyolefins, polymer latexes and mixtures thereof.

The fabric softening actives are preferably cationic or non-ionic material, preferably, cationic. The preferred softening actives for use in fabric conditioner compositions of the invention are quaternary ammonium compounds (QAC). Most preferably the quaternary ammonium compounds are tri-ethanol amine quaternary ammonium (TEA) compounds. The quaternary ammonium compounds may comprise fatty acid chains from any suitable source, preferably palm oil or tallow. It may be preferred that the fatty acid chains are sourced from plant sources.

### Isethionate based surfactant

Preferably solid laundry compositions of the invention further comprise an isethionate-based co-surfactant, preferably selected the group: sodium lauroyl methyl isethionate, ammonium cocoyl isethionate, sodium cocoyl isethionate, sodium hydrogenated cocoyl methyl isethionate, sodium lauroyl isethionate, sodium myristoyl isethionate, sodium oleoyl isethionate, sodium oleoyl methyl isethionate, sodium palm kerneloyl isethionate, sodium stearoyl methyl isethionate, sodium isethionate, dibromopropamidine diisethionate, hexamidine diisethionate, sodium methyl isethionate, and combinations thereof. Most preferably, the isethionate-based co-surfactant comprises sodium lauroyl isethionate and/or sodium cocoyl isethionate.

Preferably isethionate co-surfactant is present in solid detergent compositions in an amount ranging from 0.2 wt.% to 5 wt.% by weight of the composition, more preferably ranging from 0.5 wt.% to 1 wt.% by weight of the composition.

### Carboxylate surfactant

Preferably compositions, most preferably solid compositions, further include alkyl ether carboxylate surfactant. Preferably the alkyl ether carboxylate surfactant has a structure: R-(OCH2CH2)n-OCH2-COOH, where R is selected from saturated C8 to C18 linear alkyl chains, preferably C12, to C18 linear alkyl chains, more preferably a C12 or C18 linear alkyl chain, most preferably a C12 linear alkyl chain; n is the average ethoxylation and n is selected from 1 to 20, 5 to 20, preferably 7 to 14, more preferably 8 to 12, most preferably 9 to 11, also preferred are C10 to C18 alkyl alkoxy carboxylates comprising 1-5 ethoxy units. Weights of alkyl ether carboxylic acid are calculated as the protonated form, R-(OCH2CH2)n-OCH2COOH. They may be used as salt version for example sodium salt, or amine salt. The alkyl chain is aliphatic and linear and may be selected from: CH3(CH2)7-; CH3(CH2)8-; CH3(CH2)9-; CH3(CH2)10-; CH3(CH2)11-; CH3(CH2)12-; CH3(CH2)13-; CH3(CH2)14-; CH3(CH2)15-; CH3(CH2)16-; and, CH3(CH2)17-.The alkyl chain is preferably selected from CH3(CH2)15- and CH3(CH2)17-. Alkyl ether carboxylic acid are available from Kao (Akypo^{®}), Huntsman (Empicol^{®}) and Clariant (Emulsogen^{®}).

### Branched surfactant

Preferably the solid laundry composition comprises a branched surfactant. More preferably sulphated ethoxylated C10 Guerbet alcohol with a number average degree of ethoxylation in the range of 2.5 to 6.

### Sources

Surfactants, preferaby the further surfactants, in particular but not exclusively any alkyl chains, may be based on fossil carbon or renewable carbon. Preferably, they are obtained from a renewable carbon source which may be derived from the biomass, carbon capture (as in WO2022219118, WO2022219109, WO2022219132, etc.) , or chemical recycling. Alkyl chains may be produced by genetically engineered cells and microorganisms, e.g as in WO2013152051, WO2008119082.

A renewable source is one where the material is produced by natural ecological cycle of a living species, preferably by a plant, algae, fungi, yeast or bacteria, more preferably plants, algae or yeasts. This excludes fossil based carbon sources.

Preferred plant sources of oils are rapeseed, sunflower, maze, soy, cottonseed, olive oil and tall oil, palm kernel and coconut oil. The required ratio of e.g. C12:C14 may be obtained by fractionation/distillation and mixing of components.

Triglycerides are preferred and may be obtained from biomass using yeasts as described in Energy Environ. Sci., 2019,12, 2717 by Masri M.A. et al. Non edible plant oils may be used and are preferably selected from the fruit and seeds of Jatropha curcas, Calophyllum inophyllum, Sterculia feotida, Madhuca indica (mahua), Pongamia glabra (koroch seed), Linseed, Pongamia pinnata (karanja), Hevea brasiliensis (Rubber seed), Azadirachta indica (neem), Camelina sativa, Lesquerella fendleri, Nicotiana tabacum (tobacco), Deccan hemp, Ricinus communis L.(castor), Simmondsia chinensis (Jojoba), Eruca sativa. L., Cerbera odollam (Sea mango), Coriander (Coriandrum sativum L.), Croton megalocarpus, Pilu, Crambe, syringa, Scheleichera triguga (kusum), Stillingia, Shorea robusta (sal), Terminalia belerica roxb, Cuphea, Camellia, Champaca, Simarouba glauca, Garcinia indica, Rice bran, Hingan (balanites), Desert date, Cardoon, Asclepias syriaca (Milkweed), Guizotia abyssinica, Radish Ethiopian mustard, Syagrus, Tung, Idesia polycarpa var. vestita, Alagae, Argemone mexicana L. (Mexican prickly poppy, Putranjiva roxburghii (Lucky bean tree), Sapindus mukorossi (Soapnut), M. azedarach (syringe),Thevettia peruviana (yellow oleander), Copaiba, Milk bush, Laurel, Cumaru, Andiroba, Piqui, B. napus, Zanthoxylum bungeanum.

The C12 C14 linear alcohols which are suitable as an intermediate step in the manufacture of C12 C14 ether sulphate can be obtained from many different sustainable sources including primary sugars, biomas, recycled waste plastic, municipal solid waste, marine carbon, waste oils, methane capture

### Further Components of Home Care Compositions of the Invention

Compositions of the invention may further comprise any of the following components:

### Builders

Compositions of the invention may comprise builders or sequestrants /chelates which can be organic or inorganic or a mixture thereof. Suitable inorganic builders include chlorides, hydroxides, carbonates, sesquicarbonates, bicarbonates, silicates, zeolites, and mixtures thereof. Specific examples of such materials include sodium and potassium chloride, sodium and potassium hydroxide, sodium and potassium carbonate, sodium and potassium bicarbonate, sodium sesquicarbonate, sodium silicate and mixtures thereof.

Suitable organic builders include the alkali metal (e.g. sodium and potassium) citrates, succinates, malonates, carboxymethyl succinates, carboxylates, polycarboxylates and polyacetyl carboxylates. Specific examples include sodium, potassium and lithium salts of oxydisuccinic acid, mellitic acid, benzene polycarboxylic acids, and citric acid. Aminopolycarboxylates are preferred. Suitable examples of aminopolycarboxylates include, but not limited to, glutamic acid N,N-diacetic acid (GLDA), methylglycinediacetic acid (MGDA), ethylenediaminedisuccinic acid (EDDS), iminodisuccinic acid (IDS), iminodimalic acid (IDM), nitrilotriacetic acid (NTA), ethylenediaminetetraacetic acid (EDTA), diethylenetriaminepentaacetic acid (DTPA), hydroxyethylenediaminetetraacetic acid (HEDTA), iminodiacetic acid (IDA), hydroxyethyliminodiacetic acid (HEIDA), aspartic acid diethoxysuccinic acid (AES), aspartic acid-N,N-diacetic acid (ASDA), hydroxyethylethylene-diaminetriacetic acid (HEEDTA), iminodifumaric (IDF), iminoditartaric acid (IDT), iminodimaleic acid (IDMAL), ethylenediaminedifumaric acid (EDDF), ethylenediaminedimalic acid (EDDM), ethylenediamineditartaric acid (EDDT), ethylenediaminedimaleic acid (EDDMAL) or mixtures thereof.

Other examples are DEQUEST^{™}, organic phosphonate type sequestering agents sold by Monsanto and alkanehydroxy phosphonates. Examples of phosphate sequestrants include, but not limited to, 1-hydroxyethylidene-1,1-diphosphnic acid (HEDP), diethylenetriaminepenta(methylenephosphonic acid) (DTPMP), hexamethylenediaminetetra(methylenephosphonic acid) (HDTMP), aminotris(methylenephosphonic acid) (ATMP), ethylenediaminetetra(methylenephosphonic acid) (EDTMP), tetramethylenediaminetetra(methylenephosphonic acid) (TDTMP), phosphonobutanetricarboxylic acid (PBTC) or mixtures thereof.

Organic builders include polymers e.g. polyacrylic acid, polymaleic acid, and polyacrylic/polymaleic acid copolymers and their salts, for example those sold by BASF under the name SOKALAN^{™}. If utilized, the organic builder materials may comprise from about 0.5 to 20 wt.%, preferably from 1 to 10 wt.% of the composition. The preferred builder level is less than 10 wt.% and preferably less than 5 wt.% of the composition.

The sequestrant can be in the form of an acid or a corresponding salt. Preferably the sequestrant is in the form of a corresponding salt, more preferably an alkali metal salt and even more preferably a sodium salt.

Mixtures of any of the above-described materials may also be used.

The composition of the present invention preferably comprises the builders in an amount of from 0.01 to 10%, more preferably from 0.1 to 5%, even more preferably from 0.25 to 4% and most preferably from 0.5 to 2.5%, based on total weight of the composition and including all ranges subsumed therein.

### Hydrotropes

Compositions of the invention preferably comprise non-aqueous carriers selected from hydrotropes, co-solvents and phase stabilizers. Such materials are typically low molecular weight, water-soluble or water-miscible organic liquids such as C1 to C5 monohydric alcohols (such as ethanol and n- or i-propanol); C2 to C6 diols (such as monopropylene glycol and dipropylene glycol); C3 to C9 triols (such as glycerol); polyethylene glycols having a weight average molecular weight (M_{w}) ranging from about 200 to 600; C1 to C3 alkanolamines such as mono-, di- and triethanolamines; and alkyl aryl sulfonates having up to 3 carbon atoms in the lower alkyl group (such as the sodium and potassium xylene, toluene, ethylbenzene and isopropyl benzene (cumene) sulfonates). Mixtures of any of the above described materials may also be used.

Non-aqueous carriers, when included, may be present in an amount ranging from 0.01 to 50% by weight of the composition, preferably from 0.05 to 30%, more preferably from 0.1 to 15% and even more preferably from 0.2 to 5%, based on total weight of the composition and including all ranges subsumed therein. The level of hydrotrope used is linked to the level of surfactant and it is desirable to use hydrotrope level to manage the viscosity in such compositions. The preferred hydrotrope are monopropylene glycol, glycerol, triethanolamines or mixtures thereof.

### Soil Release Polymers

The composition of the invention preferably comprises soil release polymer SRP. SRPs may be charged (e.g. anionic) or non-charged monomer units, and structures may be linear, branched or star-shaped. The SRP may also include capping groups to control molecular weight or to alter polymer properties such as surface activity. The weight average molecular weight (M_{w}) of the SRP may suitably range from about 1000 to about 20,000 and preferably ranges from about 1500 to about 10,000.

SRPs for use in the invention may suitably be selected from copolyesters of dicarboxylic acids (for example adipic acid, phthalic acid or terephthalic acid), diols (for example ethylene glycol or propylene glycol) and polydiols (for example polyethylene glycol or polypropylene glycol). The copolyester may also include monomeric units substituted with anionic groups, such as for example sulfonated isophthaloyl units. Examples of such materials include oligomeric esters produced by transesterification/oligomerization of poly(ethyleneglycol) methyl ether, dimethyl terephthalate ("DMT"), propylene glycol ("PG") and poly(ethyleneglycol) ("PEG"); partly- and fully-anionic-end-capped oligomeric esters such as oligomers from ethylene glycol ("EG"), PG, DMT and Na-3,6-dioxa-8-hydroxyoctanesulfonate; nonionic-capped block polyester oligomeric compounds such as those produced from DMT, Me-capped PEG and EG and/or PG, or a combination of DMT, EG and/or PG, Me-capped PEG and Na-dimethyl-5-sulfoisophthalate, and copolymeric blocks of ethylene terephthalate or propylene terephthalate with polyethylene oxide or polypropylene oxide terephthalate.

Other types of SRP for use in the invention include cellulosic derivatives such as hydroxyether cellulosic polymers, C₁-C₄ alkylcelluloses and C₄ hydroxyalkyl celluloses; polymers with poly(vinyl ester) hydrophobic segments such as graft copolymers of poly(vinyl ester), for example C₁-C₆ vinyl esters (such as poly(vinyl acetate)) grafted onto polyalkylene oxide backbones; poly(vinyl caprolactam) and related co-polymers with monomers such as vinyl pyrrolidone and/or dimethylaminoethyl methacrylate; and polyester-polyamide polymers prepared by condensing adipic acid, caprolactam, and polyethylene glycol.

Preferred SRPs for use in the invention include copolyesters formed by condensation of terephthalic acid ester and diol, preferably 1,2 propanediol, and further comprising an end cap formed from repeat units of alkylene oxide capped with an alkyl group. Examples of such materials have a structure corresponding to general formula (VI): 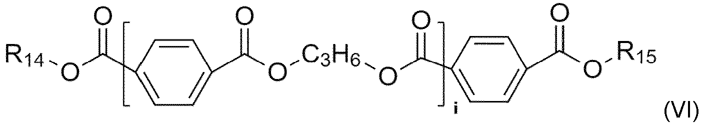
in which R₁₄ and R₁₅ independently of one another are X-(OC₂H₄)_{q}-(OC₃H₆)_{s;}
in which X is C₁₋₄ alkyl and preferably methyl;
q is a number from 12 to 120, preferably from 40 to 50;
s is a number from 1 to 10, preferably from 1 to 7; and
i is a number from 4 to 9.

Because they are averages, q, s and i are not necessarily whole numbers for the polymer in bulk.

Mixtures of any of the above described materials may also be used.

The overall level of SRP, when included, may range from 0.1 to 10% by weight of the composition, depending on the level of polymer intended for use in the final composition and which is desirably from 0.3 to 7%, more preferably from 0.5 to 5%, based on total weight of the composition and including all ranges subsumed therein.

Suitable SRPs are described in greater detail in U. S. Patent Nos. 5,574,179; 4,956,447; 4,861,512; 4,702,857, WO 2007/079850 and WO2016/005271. If employed, SRPs will typically be incorporated into the composition herein in concentrations ranging from 0.01 to 10%, more preferably from 0.1 to 5% by weight of the composition.

### Polymeric Cleaning Boosters

Preferably, compositions of the invention include polymeric cleaning boosters, as an alternative or in addition to the SRPs described above. Preferred polymeric cleaning boosters include anti-redeposition polymers .

Preferred are anti-redeposition polymers include alkoxylated polyethyleneimines. These comprise ethylene imine units -CH₂CH₂NH- and, where branched, the hydrogen on the nitrogen is replaced by another chain of ethylene imine units. Preferred alkoxylated polyethyleneimines have a polyethyleneimine backbone of about 300 to about 10000 weight average molecular weight (M_{w}). The polyethyleneimine backbone may be linear or branched. It may be branched to the extent that it is a dendrimer. The alkoxylation may typically be ethoxylation or propoxylation, or a mixture of both. Where a nitrogen atom is alkoxylated, a preferred average degree of alkoxylation is from 10 to 30, preferably from 15 to 25 alkoxy groups per modification. A preferred material is ethoxylated polyethyleneimine, with an average degree of ethoxylation being from 10 to 30, preferably from 15 to 25 ethoxy groups per ethoxylated nitrogen atom in the polyethyleneimine backbone. Mixtures of any of the above described materials may also be used.

More preferably, the polyamine is an alkoxylated cationic or zwitterionic polyamine polymer, wherein the positive charge is provided by quaternisation of the nitrogen atoms of the amines, and the anionic groups (where present) by sulphation or sulphonation of the alkoxylated group. Preferably the alkoxylate is selected from propoxy and ethoxy, most preferably ethoxy.

Preferably greater than or equal to 50 mol% of nitrogen amines are quaternised, preferably with a methyl group. Preferably the polymer contains 2 to 10, more preferably 2 to 6, most preferably 3 to 5 quanternised nitrogen amines. Preferably the alkoxylate groups are selected from ethoxy and propoxy groups, most preferably ethoxy.

Preferably the polymer contains ester (COO) or acid amide (CONH) groups within the structure, preferably these groups are placed, so that when all the ester or acid amide groups are hydrolysed, at least one, preferably all of the hydrolysed fragments has a molecular weight of less than 4000, preferably less than 2000, most preferably less than 1000. Preferably the polymer is of the form: 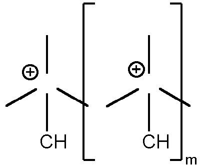 where R¹ is a C3 to C8 alkyl group, X is an a (C₂H₄O)nY group where n is from 15 to 30, where m is from 2 to 10, preferably 2, 3, 4 or 5 and where Y is selected from OH and SO₃⁻ and preferably the number of SO₃⁻ groups is greater than the number of OH groups. Preferably there are from 0, 1 or 2 OH groups. X and R¹ may contain ester groups within them. X may contain a carbonyl group, preferably an ester group. There is preferably 1 C₂H₄O unit separating the ester group from the N, such that the structural unit N- C₂H₄O-ester- (C₂H₄O)ₙ₋₁Y is preferred.

Such polymers are described in WO2021239547 (Unilever). An example polymer is sulphated ethoxylated hexamethylene diamine and examples P1, P2, P3, P4, P5 and P6 of WO2021239547. Acid amide and ester groups may be included using lactones or sodium chloroacetate respectively (Modified Williamson synthesis), addition to an OH or NH group, then subsequent ethoxylation.

Addition of lactones is discussed in WO2021/165468.

A composition of the invention will preferably comprise from 0.025 to 8 wt.% of one or more anti-redeposition polymers such as, for example, the alkoxylated polyethyleneimines or zwitterionic polyamines which are described above.

### Preservative

The composition preferably comprises a preservative or a mixture of preservatives. Preferably the preservative is selected from benzoic acid and salts thereof, alkylesters of p-hydroxybenzoic acid and salts thereof, sorbic acid, diethyl pyrocarbonate, dimethyl pyrocarbonate, preferably benzoic acid and salts thereof, most preferably sodium benzoate. An alternatively preferred preservative is selected from sodium benzoate, phenoxyethanol, dehydroacetaic acid and mixtures thereof.

The preservative is present in the composition at 0.1 to 3 wt.%, preferably 0.3 to 1.5 wt.%. Weights are calculated for the protonated form where appropriate.

Preferably, the composition comprises sodium benzoate at from 0.1 to 3 wt.%, preferably 0.3 to 1.5 wt.% of the composition. Preferably, the composition comprises phenoxyethanol at from 0.1 to 3 wt.%, preferably 0.3 to 1.5 wt.% of the composition. Preferably, the composition comprises dehydroacetic acid at from 0.1 to 3 wt.%, preferably 0.3 to 1.5 wt.% of the composition. Preferably, the composition comprises less than 0.1 wt.% isothiazolinone-based preservative, more preferably less than 0.05 wt.%.

### Fluorescent Agent

Compositions of the invention may comprise a fluorescer, preferably as alkali metal salts, for example, the sodium salts, and preferably at level from 0.005 to 2%, more preferably 0.01 to 0.5% by weight of the composition. Preferred classes of fluorescent agents are: Di-styryl biphenyl compounds, e.g. Tinopal (Trade Mark) CBS-X, Di-amine stilbene di-sulphonic acid compounds, e.g. Tinopal DMS pure Xtra, Tinopal 5BMGX, and Blankophor (Trade Mark) HRH, and Pyrazoline compounds, e.g. Blankophor SN.

### Shading dyes

Compositions of the invention may comprise shading dyes. Preferred dyes are violet or blue. Shading dyes can mask yellowing of fabrics and/or compositions. Suitable and preferred classes of dyes include direct dyes, acid dyes, hydrophobic dyes, basic dyes, reactive dyes and dye conjugates. Preferred examples are Disperse Violet 28, Acid Violet 50, anthraquinone dyes covalently bound to ethoxylate or propoxylated polyethylene imine as described in WO2011/047987 and WO 2012/119859 alkoxylated mono-azo thiophenes, dye with CAS-No 72749-80-5, acid blue 59, and the phenazine dye selected from: 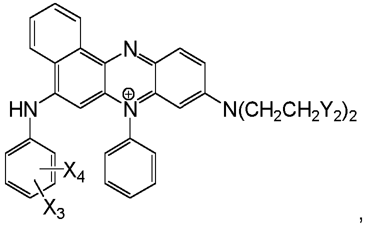 wherein:
X³ is selected from: -H; -F; -CH₃; -C₂H₅; -OCH₃; and, -OC₂H₅;
X₄ is selected from: -H; -CH₃; -C₂H₅; -OCH₃; and, -OC₂H₅;
Y₂ is selected from: -OH; -OCH₂CH₂OH; -CH(OH)CH₂OH; -OC(O)CH₃; and, C(O)OCH₃.

Alkoxylated thiophene dyes are discussed in WO2013/142495 and WO2008/087497.

Shading dye can be used with or without fluorescent agents, but preferably with fluorescent agents e.g. to reduce yellowing due to chemical changes in adsorbed fluorescent agents.

If included in compositions of the invention, shading dye is preferably present from 0.0001 to 0.1 wt. %.

### External Structurants

Liquid compositions of the invention may include one or more external structurants e.g. crystallizable glycerides such as hydrogenated castor oil; microfibrous cellulose, citrus pulp fibre, bacterial cellulose, copolymer of (meth)acrylic acid and C1-C2 alkyl (meth) acrylate. External structurants may form a structuring network in the composition to thereby alter rheology and may impart shear thinning rheology and may also enable stable suspension of materials e.g. encapsulates and visual cues stably in liquid compositions.

The composition preferably comprises a crystallizable glyceride. The composition preferably comprises an external structuring system (ESS) comprising a crystallizable glyceride for example the ESS of WO2011/031940, the contents of which, in particular as regards manufacture of the ESS are incorporated here by reference. referably, any ESS present comprises: (a) crystallizable glyceride(s); (b) alkanolamine; (c) anionic surfactant; (d) additional components; and (e) optional components, all discussed in detail below.

Crystallizable glyceride(s) of use herein preferably include "Hydrogenated castor oil" or "HCO". HCO as used herein most generally can be any hydrogenated castor oil, provided that it is capable of crystallizing in the ESS premix. Castor oils may include glycerides, especially triglycerides, comprising C10 to C22 alkyl or alkenyl moieties which incorporate a hydroxyl group. Hydrogenation of castor oil to make HCO converts double bonds, which may be present in the starting oil as ricinoleyl moieties, to convert ricinoleyl moieties to saturated hydroxyalkyl moieties, e.g., hydroxystearyl. The HCO herein may, in some embodiments, be selected from: trihydroxystearin; dihydroxystearin; and mixtures thereof. The HCO may be processed in any suitable starting form, including, but not limited those selected from solid, molten and mixtures thereof. HCO is typically present in the ESS of the present invention at a level of from about 2 percent to about 10 percent, from about 3 percent to about 8 percent, or from about 4 percent to about 6 percent by weight of the structuring system. In some embodiments, the corresponding percentage of hydrogenated castor oil delivered into a finished laundry detergent product is below about 1.0 percent, typically from 0.1 percent to 0.8 percent.

Useful HCO may have the following characteristics: a melting point of from about 40 degrees centigrade to about 100 degrees centigrade, or from about 65 degrees centigrade to about 95 degrees C; and/or Iodine value ranges of from 0 to about 5, from 0 to about 4, or from 0 to about 2.6. The melting point of HCO can be measured using either ASTM D3418 or ISO 11357; both tests utilize DSC: Differential Scanning Calorimetry. HCO of use in the present invention includes those that are commercially available. Non-limiting examples of commercially available HCO of use in the present invention include: THIXCIN(R) from Rheox, Inc. Further examples of useful HCO may be found in U.S. Patent 5,340,390. The source of the castor oil for hydrogenation to form HCO can be of any suitable origin. In one suitable embodiment, castor oil is hydrogenated using a precious metal, e.g., palladium catalyst, and the hydrogenation temperature and pressure are controlled to optimize hydrogenation of the double bonds of the native castor oil while avoiding unacceptable levels of dehydroxylation.

Any other suitable crystallizable glyceride(s) may be used, e.g. a substantially pure triglyceride of 12-hydroxystearic acid. This molecule represents the pure form of a fully hydrogenated triglyceride of 12-hydrox-9-cis-octadecenoic acid. In nature, the composition of castor oil is rather constant, but may vary somewhat. Likewise hydrogenation procedures may vary. Any other suitable equivalent materials, such as mixtures of triglycerides wherein at least 80 percent wt. is from castor oil, may be used. Exemplary equivalent materials comprise primarily, or consist essentially of, triglycerides; or comprise primarily, or consist essentially of, mixtures of diglycerides and triglycerides; or comprise primarily, or consist essentially of, mixtures of triglyerides with diglycerides and limited amounts, e.g., less than about 20 percent wt. of the glyceride mixtures, of monoglyerides; or comprise primarily, or consist essentially of, any of the foregoing glycerides with limited amounts, e.g., less than about 20 percent wt., of the corresponding acid hydrolysis product of any of said glycerides. A proviso in the above is that the major proportion, typically at least 80 percent wt, of any of said glycerides is chemically identical to glyceride of fully hydrogenated ricinoleic acid, i.e., glyceride of 12- hydroxystearic acid. It is for example well known in the art to modify hydrogenated castor oil such that in a given triglyceride, there will be two 12-hydroxystearic- moieties and one stearic moiety. Likewise it is envisioned that the hydrogenated castor oil may not be fully hydrogenated. In contrast, the invention excludes poly(oxyalkylated) castor oils when these fail the melting criteria.

Crystallizable glyceride(s) of use in the present invention preferably have a melting point of from about 40 degrees centigrade to about 100 degrees centigrade.

### Enzymes

The composition preferably comprises an enzyme selected from cellulase, a protease and an amylase/mannase mixture. In addition, further enzymes may be present such as those described below.

Preferably, the composition may comprise an effective amount of one or more enzyme preferably selected from the group comprising lipases, hemicellulases, peroxidases, hemicellulases, xylanases, xantanase, lipases, phospholipases, esterases, cutinases, pectinases, carrageenases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, tannases, nucleases (such as deoxyribonuclease and/or ribonuclease), phosphodiesterases, or mixtures thereof.

Preferably the level of an enzyme is from 0.1 to 100, more preferably from 0.5 to 50, most preferably from 5 to 30 mg active enzyme protein per 100g finished laundry liquid composition.

Examples of preferred enzymes are sold under the following trade names Purafect Prime^{®}, Purafect^{®}, Preferenz^{®} (DuPont), Savinase^{®}, Pectawash^{®}, Mannaway^{®}, Lipex ^{®}, Lipoclean ^{®}, Whitzyme ^{®} Stainzyme^{®}, Stainzyme Plus^{®}, Natalase ^{®}, Mannaway ^{®}, Amplify ^{®} Xpect ^{®}, Celluclean ^{®} (Novozymes), Biotouch (AB Enzymes), Lavergy ^{®} (BASF). Detergent enzymes are discussed in WO2020/186028(Procter and Gamble), WO2020/200600 (Henkel), WO2020/070249 (Novozymes), WO2021/001244 (BASF) and WO2020/259949 (Unilever).

A nuclease enzyme is an enzyme capable of cleaving the phosphodiester bonds between the nucleotide sub-units of nucleic acids and is preferably a deoxyribonuclease or ribonuclease enzyme. Preferably the nuclease enzyme is a deoxyribonuclease, preferably selected from any of the classes E.C. 3.1.21.x, where x=l, 2, 3, 4, 5, 6, 7, 8 or 9, E.C. 3.1.22.y where y=l, 2, 4 or 5, E.C. 3.1.30.Z where z= 1 or 2, E.C. 3.1.31.1 and mixtures thereof.

Protease enzymes hydrolyse bonds within peptides and proteins, in the laundry context this leads to enhanced removal of protein or peptide containing stains. Examples of suitable proteases families include aspartic proteases; cysteine proteases; glutamic proteases; aspargine peptide lyase; serine proteases and threonine proteases. Such protease families are described in the MEROPS peptidase database (http://merops.sanger.ac.uk/). Serine proteases are preferred. Subtilase type serine proteases are more preferred. The term "subtilases" refers to a sub-group of serine protease according to Siezen et al. , Protein Engng. 4 (1991) 719-737 and Siezen et al. Protein Science 6 (1997) 501 -523. Serine proteases are a subgroup of proteases characterized by having a serine in the active site, which forms a covalent adduct with the substrate. The subtilases may be divided into 6 sub divisions, i.e. the Subtilisin family, the Thermitase family, the Proteinase K family, the Lantibiotic peptidase family, the Kexin family and the Pyrolysin family.

Examples of subtilases are those derived from Bacillus such as Bacillus lentus, B. alkalophilus, B. subtilis, B. amyloliquefaciens, Bacillus pumilus and Bacillus gibsonii described in; US7262042 and WO09/021867, and subtilisin lentus, subtilisin Novo, subtilisin Carlsberg, Bacillus licheniformis, subtilisin BPN', subtilisin 309, subtilisin 147 and subtilisin 168 described in WO 89/06279 and protease PD138 described in (WO 93/18140). Other useful proteases may be those described in WO 92/175177,

WO 01/016285, WO 02/026024 and WO 02/016547. Examples of trypsin-like proteases are trypsin (e.g. of porcine or bovine origin) and the Fusarium protease described in WO 89/06270, WO 94/25583 and WO 05/040372, and the chymotrypsin proteases derived from Cellumonas described in WO 05/052161 and WO 05/052146. Most preferably the protease is a subtilisins (E 3.4.21.62).

Examples of subtilases are those derived from Bacillus such as Bacillus lentus, B. alkalophilus, B. subtilis, B. amyloliquefaciens, Bacillus pumilus and Bacillus gibsonii described in; US7262042 and WO09/021867, and subtilisin lentus, subtilisin Novo, subtilisin Carlsberg, Bacillus licheniformis, subtilisin BPN', subtilisin 309, subtilisin 147 and subtilisin 168 described in WO89/06279 and protease PD138 described in (WO93/18140). Preferably the subsilisin is derived from Bacillus, preferably Bacillus lentus, B. alkalophilus, B. subtilis, B. amyloliquefaciens, Bacillus pumilus and Bacillus gibsonii as described in US 6,312,936 BI, US 5,679,630, US 4,760,025, US7,262,042 and WO 09/021867. Most preferably the subtilisin is derived from Bacillus gibsonii or Bacillus Lentus.

Suitable commercially available protease enzymes include those sold under the trade names names Alcalase^{®}, Blaze^{®}; DuralaseTm, DurazymTm, Relase^{®}, Relase^{®} Ultra, Savinase^{®}, Savinase^{®} Ultra, Primase^{®}, Polarzyme^{®}, Kannase^{®}, Liquanase^{®}, Liquanase^{®} Ultra, Ovozyme^{®}, Coronase^{®}, Coronase^{®} Ultra, Neutrase^{®}, Everlase^{®} and Esperase^{®} all could be sold as Ultra^{®} or Evity^{®} (Novozymes A/S).

Suitable amylases (alpha and/or beta) include those of bacterial or fungal origin. Chemically modified or protein engineered mutants are included. Amylases include, for example, alpha-amylases obtained from Bacillus, e.g. a special strain of B. licheniformis, described in more detail in GB 1 ,296,839, or the Bacillus sp. strains disclosed in WO 95/026397 or WO00/060060. Commercially available amylases are Duramyl^{™}, Termamyl^{™}, Termamyl Ultra^{™}, Natalase^{™}, Stainzyme^{™}, Fungamyl^{™} and BAN^{™} (Novozymes A/S), Rapidase^{™} and Purastar^{™} (from Genencor International Inc.).

Suitable cellulases include those of bacterial or fungal origin. Chemically modified or protein engineered mutants are included. Suitable cellulases include cellulases from the genera Bacillus, Pseudomonas, Humicola, Fusarium, Thielavia, Acremonium, e.g. the fungal cellulases produced from Humicola insolens, Thielavia terrestris, Myceliophthora thermophila, and Fusarium oxysporum disclosed in US 4,435,307, US 5,648,263, US 5,691 ,178, US 5,776,757, WO 89/09259, WO 96/029397, and WO 98/012307. Commercially available cellulases include Celluzyme^{™}, Carezyme^{™}, Celluclean^{™}, Endolase^{™}, Renozyme^{™} (Novozymes A/S), Clazinase^{™} and Puradax HA^{™} (Genencor International Inc.), and KAC-500(B)^{™} (Kao Corporation). Celluclean^{™} is preferred.

### Lipase

Lipases are lipid esterase enzymes and the terms lipid esterase and lipase are used herein synonymously.

The composition preferably comprises from 0.0005 to 0.5 wt.%, preferably from 0.005 to 0.2 wt.% of a lipase.

Cleaning lipid esterases are discussed in Enzymes in Detergency edited by Jan H. Van Ee, Onno Misset and Erik J. Baas (1997 Marcel Dekker, New York). The lipid esterase may be selected from lipase enzymes in E.C. class 3.1 or 3.2 or a combination thereof.

Preferably the cleaning lipid esterases is selected from:
(1) Triacylglycerol lipases (E.C. 3.1.1.3); (2) Carboxylic ester hydrolase (E.C. 3.1.1.1); (3) Cutinase (E.C. 3.1.1.74); (4) Sterol esterase (E.C. 3.1.1.13); (5) Wax-ester hydrolase (E.C. 3.1.1.50). Triacylglycerol lipases (E.C. 3.1.1.3) are most preferred.

Suitable triacylglycerol lipases can be selected from variants of the Humicola lanuginosa (Thermomyces lanuginosus) lipase. Other suitable triacylglycerol lipases can be selected from variants of Pseudomonas lipases, e.g., from P. alcaligenes or P. pseudoalcaligenes (EP 218 272), P. cepacia (EP 331 376), P. stutzeri (GB 1,372,034), P. fluorescens, Pseudomonas sp. strain SD 705 (WO 95/06720 and WO 96/27002), P. wisconsinensis (WO 96/12012), Bacillus lipases, e.g., from B. subtilis (Dartois et al. (1993), Biochemica et Biophysica Acta, 1131, 253-360), B. stearothermophilus (JP 64/744992) or B. pumilus (WO 91/16422).

Suitable carboxylic ester hydrolases can be selected from wild-types or variants of carboxylic ester hydrolases endogenous to B. gladioli, P. fluorescens, P. putida, B. acidocaldarius, B. subtilis, B. stearothermophilus, Streptomyces chrysomallus, S. diastatochromogenes and Saccaromyces cerevisiae.

Suitable cutinases can be selected from wild-types or variants of cutinases endogenous to strains of Aspergillus, in particular Aspergillus oryzae, a strain of Alternaria, in particular Alternaria brassiciola, a strain of Fusarium, in particular Fusarium solani, Fusarium solani pisi, Fusarium oxysporum, Fusarium oxysporum cepa, Fusarium roseum culmorum, or Fusarium roseum sambucium, a strain of Helminthosporum, in particular Helminthosporum sativum, a strain of Humicola, in particular Humicola insolens, a strain of Pseudomonas, in particular Pseudomonas mendocina, or Pseudomonas putida, a strain of Rhizoctonia, in particular Rhizoctonia solani, a strain of Streptomyces, in particular Streptomyces scabies, a strain of Coprinopsis, in particular Coprinopsis cinerea, a strain of Thermobifida, in particular Thermobifida fusca, a strain of Magnaporthe, in particular Magnaporthe grisea, or a strain of Ulocladium, in particular Ulocladium consortiale.

In a preferred embodiment, the cutinase is selected from variants of the Pseudomonas mendocina cutinase described in WO 2003/076580 (Genencor), such as the variant with three substitutions at I178M, F180V, and S205G.

In another preferred embodiment, the cutinase is a wild-type or variant of the six cutinases endogenous to Coprinopsis cinerea described in H. Kontkanen et al, App. Environ. Microbiology, 2009, p2148-2157.

In another preferred embodiment, the cutinase is a wild-type or variant of the two cutinases endogenous to Trichoderma reesei described in WO2009007510 (VTT). In a most preferred embodiment the cutinase is derived from a strain of Humicola insolens, in particular the strain Humicola insolens DSM 1800. Humicola insolens cutinase is described in WO 96/13580 which is hereby incorporated by reference. The cutinase may be a variant, such as one of the variants disclosed in WO 00/34450 and WO 01/92502. Preferred cutinase variants include variants listed in Example 2 of

WO 01/92502. Preferred commercial cutinases include Novozym 51032 (available from Novozymes, Bagsvaerd, Denmark).

Suitable sterol esterases may be derived from a strain of Ophiostoma, for example Ophiostoma piceae, a strain of Pseudomonas, for example Pseudomonas aeruginosa, or a strain of Melanocarpus, for example Melanocarpus albomyces.

In a most preferred embodiment the sterol esterase is the Melanocarpus albomyces sterol esterase described in H. Kontkanen et al, Enzyme Microb Technol., 39, (2006), 265-273.

Suitable wax-ester hydrolases may be derived from Simmondsia chinensis.

The lipid esterase is preferably selected from lipase enzyme in E.C. class 3.1.1.1 or 3.1.1.3 or a combination thereof, most preferably E.C.3.1.1.3. Examples of EC 3.1.1.3 lipases include those described in WIPO publications WO 00/60063, WO 99/42566, WO 02/062973, WO 97/04078, WO 97/04079 and US 5,869,438. Preferred lipases are produced by Absidia reflexa, Absidia corymbefera, Rhizmucor miehei, Rhizopus deleman Aspergillus niger, Aspergillus tubigensis, Fusa 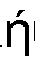 um oxysporum, Fusarium heterosporum, Aspergillus oryzea, Penicilium camembertii, Aspergillus foetidus, Aspergillus niger, Thermomyces lanoginosus (synonym:
Humicola lanuginosa) and Landerina penisapora, particularly Thermomyces lanoginosus. Certain preferred lipases are supplied by Novozymes under the tradenames. Lipolase^{®}, Lipolase Ultra^{®}, Lipoprime^{®}, Lipoclean^{®} and Lipex^{®} (registered tradenames of Novozymes) and LIPASE P "AMANO^{®}" available from Areario Pharmaceutical Co. Ltd., Nagoya, Japan, AMANO-CES^{®}, commercially available from Toyo Jozo Co., Tagata, Japan; and further Chromobacter viscosum lipases from Amersham Pharmacia Biotech., Piscataway, New Jersey, U.S.A. and Diosynth Co., Netherlands, and other lipases such as Pseudomonas gladioli. Additional useful lipases are described in WIPO publications WO 02062973, WO 2004/101759, WO 2004/101760 and WO 2004/101763. In one embodiment, suitable lipases include the "first cycle lipases" described in WO 00/60063 and U.S. Patent 6,939,702 BI, preferably a variant of SEQ ID No. 2, more preferably a variant of SEQ ID No. 2 having at least 90% homology to SEQ ID No. 2 comprising a substitution of an electrically neutral or negatively charged amino acid with R or K at any of positions 3, 224, 229, 231 and 233, with a most preferred variant comprising T23 IR and N233R mutations, such most preferred variant being sold under the tradename Lipex^{®} (Novozymes).

The aforementioned lipases can be used in combination (any mixture of lipases can be used). Suitable lipases can be purchased from Novozymes, Bagsvaerd, Denmark; Areario Pharmaceutical Co. Ltd., Nagoya, Japan; Toyo Jozo Co., Tagata, Japan; Amersham Pharmacia Biotech., Piscataway, New Jersey, U.S.A; Diosynth Co., Oss, Netherlands and/or made in accordance with the examples contained herein.

Lipid esterase with reduced potential for odour generation and a good relative performance, are particularly preferred, as described in WO 2007/087243. These include lipoclean ^{®} (Novozyme).

Preferred commercially available lipase enzymes include Lipolase^{™} and Lipolase Ultra^{™}, Lipex^{™} and Lipoclean TM (Novozymes A/S).

### Perfume

Preferably, the compositon of the present invention comprises perfume materials. The terms "perfume" and "fragrance" as used herein are used interchangeable to refer to the same material.

Preferably the perfume materials are present at a level from 0.01 to 5%, more preferably from 0.05 to 3%, even more preferably 0.1 to 1% by weight of the composition. The composition may comprise a combination of both free perfume and perfume microcapsules.

### Free perfume

The composition of the present invention preferably comprises from 0.01 to 5%, more preferably from 0.05 to 3%, even more preferably 0.1 to 1% by weight of free perfume.

Useful perfume components may include materials of both natural and synthetic origin. They include single compounds and mixtures. Specific examples of such components may be found in the current literature, e.g., in Fenaroli's Handbook of Flavor Ingredients, 1975, CRC Press; Synthetic Food Adjuncts, 1947 by M. B. Jacobs, edited by Van Nostrand; or Perfume and Flavor Chemicals by S. Arctander 1969, Montclair, N.J. (USA). These substances are well known to the person skilled in the art of perfuming, flavouring, and/or aromatizing consumer products.

Particularly preferred perfume components are blooming perfume components and substantive perfume components. Blooming perfume components are defined by a boiling point less than 250°C and a LogP greater than 2.5. Substantive perfume components are defined by a boiling point greater than 250°C and a LogP greater than 2.5. Preferably a perfume composition will comprise a mixture of blooming and substantive perfume components. The perfume composition may comprise other perfume components.

It is commonplace for a plurality of perfume components to be present in a perfume composition. In the compositions for use in the present invention it is envisaged that there will be three or more, preferably four or more, more preferably five or more, most preferably six or more different perfume components. An upper limit of 300 perfume ingredients may be applied.

Preferably, the perfume comprises a component selected from the group consisting of ethyl-2-methyl valerate (manzanate), limonene, (4Z)-cyclopentadec-4-en-1-one, dihyro myrcenol, dimethyl benzyl carbonate acetate, benzyl acetate, spiro[1,3-dioxolane-2,5'-(4',4',8',8'-tetramethyl-hexahydro-3',9'-methanonaphthalene)], benzyl acetate, Rose Oxide, geraniol, methyl nonyl acetaldehyde, decanal, octanal, undecanal, verdyl acetate, tert-butylcyclohexyl acetate, cyclamal, beta ionone, hexyl salicylate, tonalid, phenafleur, octahydrotetramethyl acetophenone (OTNE), the benzene, toluene, xylene (BTX) feedstock class such as 2-phenyl ethanol, phenoxanol and mixtures thereof, the cyclododecanone feedstock class, such as habolonolide, the phenolics feedstock class such as hexyl salicylate, the C5 blocks or oxygen containing heterocycle moiety feedstock class such as gamma decalactone, methyl dihydrojasmonate and mixtures thereof, the terpenes feedstock class such as dihydromycernol, linalool, terpinolene, camphor, citronellol and mixtures thereof, the alkyl alcohols feedstock class such as ethyl-2-methylbutyrate, the diacids feedstock class such as ethylene brassylate, and mixtures of these components.

Preferably, the perfume comprises from 0.5 to 30 wt.%, more preferably from 2 to 15 wt.% and especially preferably from 6 to 10 wt.% of the perfume component ethyl-2-methyl valerate (manzanate).

Preferably, the perfume comprises from 0.5 to 30 wt.%, more preferably from 2 to 15 wt.% and especially preferably from 6 to 10 wt.% of the perfume component limonene.

Preferably, the perfume comprises from 0.5 to 30 wt.%, more preferably from 2 to 15 wt.% and especially preferably from 6 to 10 wt.% of the perfume component (4Z)-cyclopentadec-4-en-1-one.

Preferably, the perfume comprises from 0.5 to 30 wt.%, more preferably from 2 to 15 wt.% and especially preferably from 6 to 10 wt.% of the perfume component dimethyl benzyl carbonate acetate.

Preferably, the perfume comprises from 0.5 to 30 wt.%, more preferably from 2 to 15 wt.% and especially preferably from 6 to 10 wt.% of the perfume component dihyromyrcenol.

Preferably, the perfume comprises from 0.5 to 30 wt.%, more preferably from 2 to 15 wt.% and especially preferably from 6 to 10 wt.% of the perfume component rose oxide.

Preferably, the perfume comprises from 0.5 to 30wt.%, more preferably from 2 to 15% and especially preferably from 6 to 10wt.% of the perfume component tert-butylcyclohexyl acetate.

Preferably, the perfume comprises from 0.5 to 30 wt.%, more preferably from 2 to 15 wt.% and especially preferably from 6 to 10 wt.% of the perfume component verdyl acetate.

Preferably, the perfume comprises from 0.5 to 30 wt.%, more preferably from 2 to 15 wt.% and especially preferably from 6 to 10 wt.% of the perfume component benzyl acetate.

Preferably, the perfume comprises from 0.5 to 30 wt.%, more preferably from 2 to 15 wt.% and especially preferably from 6 to 10 wt.% of the perfume component spiro[1,3-dioxolane-2,5'-(4',4',8',8'-tetramethyl-hexahydro-3',9'-methanonaphthalene)].

Preferably, the perfume comprises from 0.5 to 30 wt.%, more preferably from 2 to 15 wt.% and especially preferably from 6 to 10 wt.% of the perfume component geraniol.

Preferably, the perfume comprises from 0.5 to 30 wt.%, more preferably from 2 to 15 wt.% and especially preferably from 6 to 10 wt.% of the perfume component methyl nonyl acetaldehyde.

Preferably, the perfume comprises from 0.5 to 30 wt.%, more preferably from 2 to 15 wt.% and especially preferably from 6 to 10 wt.% of the perfume component cyclamal.

Preferably, the perfume comprises from 0.5 to 30 wt.%, more preferably from 2 to 15 wt.% and especially preferably from 6 to 10 wt.% of the perfume component beta ionone.

Preferably, the perfume comprises from 0.5 to 30 wt.%, more preferably from 2 to 15 wt.% and especially preferably from 6 to 10 wt.% of the perfume component hexyl salicylate.

Preferably, the perfume comprises from 0.5 to 30 wt.%, more preferably from 2 to 15 wt.% and especially preferably from 6 to 10 wt.% of the perfume component tonalid.

Preferably, the perfume comprises from 0.5 to 30 wt.%, more preferably from 2 to 15 wt.% and especially preferably from 6 to 10 wt.% of the perfume component phenafleur.

Preferably, the perfume comprises a component selected from the benzene, toluene, xylene (BTX) feedstock class. More preferably, the perfume component is selected from 2-phenyl ethanol, phenoxanol and mixtures thereof.

Preferably, the perfume comprises a component selected from the cyclododecanone feedstock class. More preferably, the perfume component is habolonolide.

Preferably, the perfume comprises a component selected from the phenolics feedstock class. More preferably, the perfume component is hexyl salicylate.

Preferably, the perfume comprises a component selected from the C5 blocks or oxygen containing heterocycle moiety feedstock class. More preferably, the perfume component is selected from gamma decalactone, methyl dihydrojasmonate and mixtures thereof.

Preferably, the perfume comprises a component selected from the terpenes feedstock class. More preferably, the perfume component is selected from, linalool, terpinolene, camphor, citronellol and mixtures thereof.

Preferably, the perfume comprises a component selected from the alkyl alcohols feedstock class. More preferably, the perfume component is ethyl-2-methylbutyrate.

Preferably, the perfume comprises a component selected from the diacids feedstock class. More preferably, the perfume component is ethylene brassylate.

Preferably, the perfume component listed above is present in the final composition at from 0.0001 to 1% by weight of the composition.

### Microcapsules

The composition of the present invention may comprise microcapsules. The microcapsules may be added to the composition in a slurry or solvent or carrier. By microcapsule it is herein understood to mean the microcapsule which is preferably a shell and core i.e., without any such solvent, slurry or carrier.

The composition of the present invention preferably comprises 0.01 to 5%, more preferably from 0.05 to 3%, even more preferably from 0.1 to 1% by weight of microcapsules. The weight of the microcapsules is of the material as supplied, which may be in the form of a slurry comprising microcapsules.

The microcapsule shell materials, preferably comprise, but are not limited to; aminoplasts, proteins, polyurethanes, polyacrylates, polymethacrylates, polysaccharides, polyamides, polyolefins, gums, silicones, lipids, modified cellulose, polyphosphate, polystyrene, polyesters or combinations thereof.

The microcapsule core comprises active material and optionally further comprises solvents, crosslinking agents as described above or combinations thereof. The core is preferably non-aqueous. Preferably the active material comprises perfume, and most preferably the perfume components as described above.

Preferably the encapsulated active material (e.g. perfume as described above for free perfume) is present at a level from 5 to 99 %, preferably 10 to 99%, more preferably 15 to 95%, and most preferably 20 to 93% by weight of the microcapsule.

An example of a preferred microcapsule suitable for use in the present invention is a microcapsule with a shell formed from protein and/or polysaccharide and a core comprising perfume.

The microcapsules of the present invention preferably have a D50 particle size from 0.1 to 1000 microns, more preferably 0.5 to 500 microns, even more preferably from 1 to 200 microns, and most preferably from 1 to 100 microns. The particle size can be determined by dynamic light scattering using a Malvern Mastersizer, for example, Mastersizer 3000. The microcapsules may be prepared by any suitable process such as coacervation, interfacial polymerization, polycondensation and 3D printing.

Solid laundry detergent compositions of the invention preferably include from 0 wt.% to 8 wt.%, still preferably from 0 wt.% to 5 wt.%, more preferably from 0 wt.% to 1 wt.% of an inorganic non-carbonate builder selected from silica, zeolites, phosphate, or mixtures thereof. Preferably the composition of the present invention is substantially free of silicate salt, zeolite salt and phosphate builder. By substantially free it is meant that there is no deliberately added carbonate salt in the composition. Solid laundry detergent compositions of the invention preferably include preferably include from 0 wt.% to 6 wt.% bicarbonate salt, preferably sodium bicarbonate. Solid laundry detergent compositions of the invention preferably include from 0 wt.% to 5 wt.% alkali metal silicate, more preferably 0 wt.% to 3 wt.% alkali metal silicate.

### Other ingredients

Compositions of the invention may contain further optional ingredients to enhance performance and/or consumer acceptability. Examples of such ingredients include anti-foam, foam boosting agents, polyelectrolytes, anti-shrinking agents, anti-wrinkle agents, anti-oxidants, sunscreens, anti-corrosion agents, drape imparting agents, anti-static agents, ironing aids, colorants, pearlisers and/or opacifiers, silicones, clays, such as smectite clays. Each of these ingredients will be present in an amount effective to accomplish its purpose. Generally, these optional ingredients are included individually at an amount 0.1 - 5%wt, preferably 1-4%, more preferably 2-3%wt, based on total weight of the composition.

### Packaging and dosing

The composition of the invention may be stored and/or supplied in any suitable packaging such as a bottle, or carton or multidose packs which may comprise a top or bottom closure. A dosing device for measuring the dose may be supplied with the pack for example as a part of a closure e.g. cap or in addition e.g. an over-cap, or as an integrated system e.g. with a reservoir. Preferably, the packaging comprises a moulded article, preferably comprising post-consumer recycled material (PCR). Preferably the packaging is a non-food grade container.

### Methods of Treatment

Methods of treatment (of a substrate may comprise the step of forming a liquid (known as a "wash liquor") by adding to water, a dose of the composition of the present invention.

Other steps may include pre-treatment, adding to the wash liquor the substrate/s to be treated, rinsing, drying etc. The composition may be added during any step or steps of the method. Steps may be carried out manually or using a washing machine, preferably by machine and one or more may be carried out automatically as described herein. One or more rinse steps may follow a wash step and in such rinse step/s a fabric conditioner may be used. The fabric may then be dried e.g. air dried or dried using a tumble drier. Once dried the fabric may be stored before use or may be used straight away. Once the fabric has been used, it will then be treated, e.g. washed again, preferably with a composition of the present invention as described herein.

### AUTO-DOSING

Compositions of the invention may also, advantageously used in automatic methods e.g.in an auto-dosing washing machine.

Accordingly, and in a further aspect, there is provided a washing machine comprising a reservoir, said reservoir comprising from 80ml to 3000ml of a home care composition according to the first aspect.

In a further aspect there is provided a method for cleaning fabric comprising filling a reservoir of a washing machine with from 80ml to 3000ml of a home care composition according to the first aspect, and conducting at least two washing cycles before adding a further home care composition to the reservoir.

In a further aspect there is provided a method for cleaning fabric comprising filling a reservoir of a washing machine with from 80ml to 3000ml of a home care composition according to the first aspect, and conducting a washing cycle which draws a portion of the home care composition from the reservoir and leaves at least 20ml in the reservoir.

In auto-dosing methods, the home care composition is preferably a liquid, more preferably a liquid detergent, most preferably a liquid laundry detergent. The amount of 80ml to 3000 ml characterises an amount that is more than one dose. Preferably, the reservoir comprises from 250ml to 2500ml, more preferably from 400ml to 2000ml liquid detergent.

The washing machine preferably comprises a detergent reservoir which is able to store up to 3000 ml of detergent. Such a washing machine is known on the market as an auto-dosing washing machine and is capable of storing sufficient liquid detergent for more than one washing cycle and preferably for many washing cycles. A typical example of such a machine is found in EP-A-3 071 742 (Electrolux). Preferably, the washing machine is a front-loading automatic washing machine.

Preferably, the washing machine comprises an outer casing, a washing tub which is arranged inside the casing with its opening or mouth directly facing a laundry loading/unloading opening realized on a the front wall of the casing, a detergent dispensing assembly which is structured for supplying detergent into the washing tub, a main fresh-water supply circuit which is structured for being connected to the water mains and for selectively channelling a flow of fresh water from the water mains to the detergent dispensing assembly and/or to the washing tub, and an appliance control panel which is structured for allowing the user to manually select the desired washing-cycle.

The washing machine detergent dispensing assembly also comprises an auto-dosing detergent dispenser which is structured for automatically dosing, on the basis of the selected washing cycle, the suitable amount of detergent to be used during the selected washing cycle, and which comprises: one or more detergent reservoirs each of which is structured for receiving a quantity of detergent for performing a plurality of washing cycles; and, for each detergent reservoir, a respective detergent feeding pump which is structured to selectively suck, from the corresponding detergent reservoir, the amount of the detergent for performing the selected washing cycle, and to pump/channel said specific amount of detergent into a detergent collecting chamber fluidly communicating with the washing tub.

As well as the reservoir capable of containing the requisite amount of liquid detergent, the washing machine of the invention comprises a motor to drive the agitation of a drum. Water is flushed through the machine and a pre-determined dose of detergent is added to this water to create the wash liquor.

Using an auto-dosing washing machine a consumer may conduct a number of washing cycles before needing to add further liquid detergent to the reservoir. Typically, a reservoir is sufficient to conduct five or more washes and potentially up to 20 or more depending on the size of the reservoir in the washing machine and also the dose to be used for each washing cycle.

Each washing cycle comprises the drawing of a volume of liquid laundry detergent from the reservoir sufficient to form an appropriate wash liquor to clean the fabric.

Preferably, this volume is from 10 to 75ml but this is likely dependent on the amount of fabric, the stains to be cleaned and the amount of surfactant and other cleaning agents in the liquid laundry composition.

After the first washing cycle is completed, the remaining liquid detergent is maintained in the washing machine until the next cycle starts, when a further dose is pumped from the reservoir and mixed with water to form a wash liquor.

It is also possible that the compositions described herein are loaded into the washing machine by way of a cartridge which is co-operable with a component part to the washing machine. A cartridge may contain the requisite volume of liquid detergent composition required and which may be from 200ml to 3000ml.

### EXAMPLES: Particulate Cleaning

All manipulations involving air- and moisture-sensitive reagents were carried out either under an atmosphere of nitrogen gas using standard Schlenk techniques.

Where used, 4-Methylbenzyl alcohol (MBA, 98%, Sigma Aldrich) was recrystallised from petroleum ether and dried under vacuum and stored under nitrogen.

### Raw Materials:

Methoxypolyethylene epoxide (average Mn 750), 2-{[2-(Dimethylamino)ethyl]methylamino}ethanol (98w%), and succinic anhydride (>99w%) are supplied by Sigma-Aldrich.

### ROCOP Polymerisation Catalyst Synthesis

The catalyst [Co(III)/K(I)] was synthesised from the dialdehyde pro-ligand (Enamime LTd.), ethylene diamine (Sigma-Aldrich, ≤99.0%), Co(OAc)₂ (Sigma Aldrich, 99.99%), and KOAc (Sigma Aldrich, ≥99.0%) via a literature method⁷ and was dried under vacuum during 2 days.

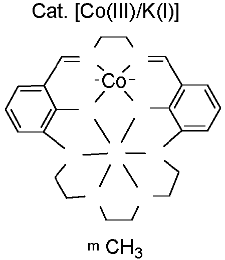

### Example 1

### Synthesis of polymer using amine functionalised chain transfer agent.

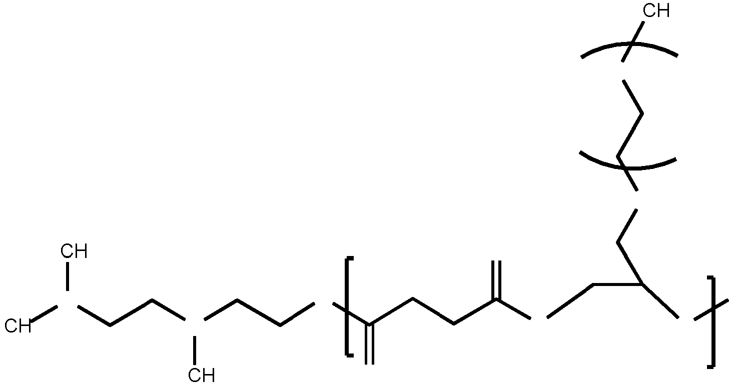

This is an example of a particulate cleaning polymer, comprising 2 amines in the end group.

### Formula I selections:

| | |
|---|---|
| X | X² |
| J | O |
| n | 17 |
| R¹ | CH3 |
| L1 | CH2CH2 |
| B' | N(CH3)2CH2CH2N(CH3)CH2CH2OH |
| e | 1 |

Example 1 is synthesised via the copolymerization of methoxypolyethylene epoxide (average Mn 750), and succinic anhydride using 2-{[2-(Dimethylamino)ethyl]methylamino}ethanol as the chain transfer agent (CTA) and the catalyst P₁-*t*-Bu. Polymerizations are conducted with different equivalents of poly(ethylene glycol) methyl ether. Inside a nitrogen filled glovebox, the materials are added to a dried vial equipped with a magnetic stirrer bar. The vial is sealed and heated to 100 °C in an oil bath for the time stated. Aliquots of the reaction mixture are taken inside the glovebox. The polymerisations are quenched by exposing the reaction mixture to air and cooling it down to ambient temperature resulting in the polymer below.

### Example 2

### Synthese of sulfonated polymer

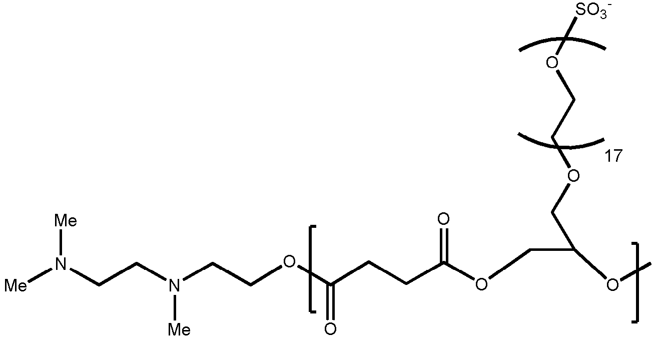

### Formula I selections:

| | |
|---|---|
| X | X² |
| J | O |
| n | 17 |
| R¹ | SO3⁻ |
| L1 | CH2CH2 |
| B' | N(CH3)2CH2CH2N(CH3)CH2CH2OH |
| e | 1 |

This is an example of a particulate cleaning polymer, comprising 2 amines in the end group but also carrying a sulfonate group, incorporated by post-modification via sulfonation.

### Sulfonation of Example 1 to produce Example 2

The polymer of Example 1 made and then is post-modified via a sulfonation reaction to produce Example 2 by dissolving the polymer in dichloromethane and slowly adding chlorosulfonic acid to the polymer solution at ambient temperature. The reaction is allowed to proceed for 24 hours to ensure maximum sulfonation of the polyethylene glycol moieties before an aqueous solution of sodium hydroxide is slowly added and the biphasic mixture is subsequently stirred vigorously. After 30mins, the mixture is allowed to separate, and the dichloromethane phase is then washed twice with water before the dichloromethane layer is separated and the dichloromethane then removed *in vacuo* to yield Example 2.

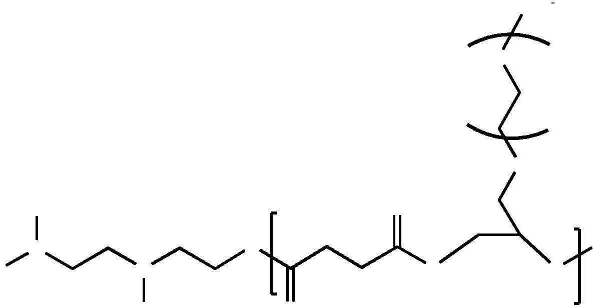

While specific embodiments of the invention have been described herein for the purpose of reference and illustration, various modifications will be apparent to a person skilled in the art without departing from the scope of the invention as defined by the appended claims.

### Home Care Composition Examples in the form of a laundry Liquid Composition

| **Ingredient** | **Weight%** | | | | | | | |
|---|---|---|---|---|---|---|---|---|
| | **A** | **B** | **C** | **D** | **E** | **F** | **G** | **H** |
| C11.8 linear alkyl benzene sulfonate | 17 | 13 | 1.5 | 4.0 | 4 | 2 | 0 | 0 |
| C12-14 alkylethoxy (3) sulfate' | 8 | 10 | 5.5 | 2.0 | 3 | 0 | 8 | 0 |
| Oleyl ether sulfate (6EO) | 0 | 0 | 0 | 0 | 0 | 4 | 0 | 4 |
| C12-14 alkyl-7 ethoxylate² | 5 | 10 | 1.0 | 9 | | | 5 | |
| Oleic Methyl Ester Ethoxylate (10EO) | | | | | 3 | 4 | | 8 |
| C12-14 dimethylamine oxide | 1 | 0.5 | 0.5 | 0.5 | 0.5 | 0 | 1 | 1 |
| C12-18 fatty acid | 2 | 1.5 | 0.0 | 1 | 0.5 | 0 | 1 | 0 |
| **Cleaning Polymer of the invention, preferably Example 1 or Example 2, more preferably Example 2.** | **0** | **1.5** | **0.5** | **0** | **1** | **0** | **0** | **0** |
| Sulfated Ethoxylated Hexamethylenediamine Quaternized | 1 | 0 | 0 | 0.5 | 1 | 1.5 | 1 | 1 |
| Co-polymer of PEG / Vinyl Acetate with 6000Mw | 1 | 1.5 | 0.5 | 0.5 | 0.5 | 0.5 | 1 | 1 |
| PEG-2 Stearate | 1 | 0 | 0 | 0 | 0 | 0 | 1 | 1 |
| PEG/PPG-10/2 Propylheptyl Ether | 3 | 1 | 0 | 1 | 0 | 0 | 1 | 1 |
| Hydrogenated Castor Oil | 0.1 | 0.1 | 0.2 | 0.1 | 0 | 0.2 | 0.2 | 0.2 |
| Propylene glycol | 3 | 2 | 0 | 0 | 0 | 2 | 0 | 0 |
| Glycerol | 1 | 1 | 0 | 1 | 1 | 1 | 0 | 0 |
| Blue Dye (ethoxylate anthraquinone) | 0.00 2 | 0.00 1 | 0.00 1 | 0.00 1 | 0.00 1 | 0.00 2 | 0 | 0 |
| Polyester Soil Release Agent | 0.5 | 0 | 0.5 | 1 | 1 | 1 | 0.5 | 0.5 |
| Sequesterant (citric acid/Dequest 2066) | 2 | 1 | 1 | 1 | 1 | 2 | 1 | 1 |
| Protease - Purafect ^{®} (85mg active/g) | 0.3 | 0.2 | 0.1 | 0.2 | 0.3 | 0.3 | 0.3 | 0.3 |
| Cellulase - Celluclean ^{®} (16mg active/g) | 0.1 | 0.1 | 0.1 | 0.1 | 0.1 | 0.1 | 0.1 | 0.1 |
| Amylase - Stainzyme^{®} | 0.1 | 0.1 | 0.1 | 0.1 | 0.1 | 0.1 | 0.1 | 0.1 |
| Mannase - Mannaway ^{®} (4mg active/g) | 0.1 | 0.05 | 0.05 | 0.05 | 0.05 | 0.05 | 0.05 | 0.0 5 |
| Polyester 1 - Table 1³ | **0.01** | **0.1** | **0.4** | **0.6** | **0.8** | **1.0** | **3.0** | **5.0** |
| Preservative | 0.5 | 0.2 | 0.5 | 1 | 0 | 1 | 1 | 1 |
| Base (monoethanoamine or triethanolamine/NaOH) | To pH 7.5 | | | | | | | |
| Parfum | 0.6 | 0.6 | 0.5 | 0.4 | 0.8 | 0.5 | 0.4 | 0.4 |
| Water and minors | Remainder | | | | | | | |

| | | | | | | | | |
|---|---|---|---|---|---|---|---|---|
| ^{1,2} also made with the C12-18 versions | | | | | | | | |

While specific embodiments of the invention have been described herein for the purpose of reference and illustration, various modifications will be apparent to a person skilled in the art without departing from the scope of the invention as defined by the appended claims.

## Claims

1. A home care composition comprising a cleaning polymer comprising a repeating unit of formula I: 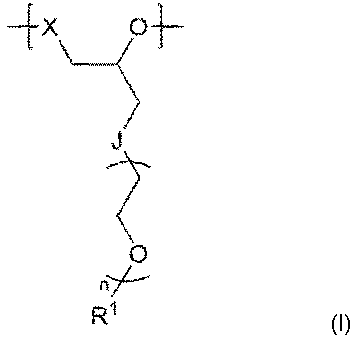 wherein:
n is a number 0 to 150;
J is O, alkylene C2-C22, or C-R'R" in which R' and R" are independently selected from H, or
(1-10C) alkyl group;
X is:
i) a group X¹ of structure: 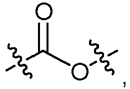 or
ii) a group X² of structure: 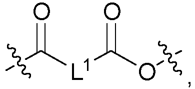 in which L¹ is a linker;
iii) a group X³ of structure: 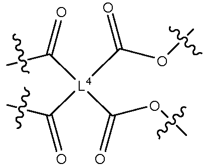 in which L⁴ is a linker separating at least two of the four carbonyl groups by a minimum of 3 bond lengths;
R¹ is H, C1-C22 alkyl or C1-C22 alkenyl, SO₃⁻, SO₃H, R², or Y;
R² is a group: 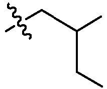
each R³ is independently H or Y; and
Y is a group of structure: 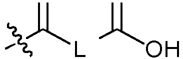
in which L² is a linker separating the two carbonyl groups by a distance of 3-4 bond lengths.

2. A home care composition according to claim 1, wherein the cleaning polymer comprises at least one amine.

3. A home care composition according to claim 1 or claim 2, wherein the polymer comprises an end group and the at least one amine is in the end group.

4. A home care composition according to claim 2 or claim 3 wherein the polymer

5. A home care composition according to any preceding claim wherein when X is a group X1, a carbonate linkage is formed between adjacent repeating units of formula I; and when X is a group X2, an ester linkage is formed between adjacent repeating units of formula I.

6. A home care composition according to any preceding claim, wherein X is a group X¹.

7. A home care composition according to any preceding claim, wherein X is a group X².

8. A home care composition according to any preceding claim, wherein in some repeating units, X may be a group X¹, and in other repeating units, X may be a group X². The polymer may therefore be a poly(carbonate-co-ester).

9. A home care composition according to any preceding claim comprising a further surfactant.

10. A home care composition according to any preceding claim wherein the further surfactant selected from anionic surfactants, non-ionic surfactant, cationic surfactants, zwitterionic surfactants and amphoteric surfactants and mixtures thereof.

11. A home care composition according to any preceding claim comprising an enzyme.

12. A home care composition according to any preceding claim comprising a soil release polymer

13. A home care composition according to any preceding claim comprising an alkoxylated cationic or zwitterionic polyamine polymer.

14. A home care composition according to any preceding claim comprising a perfume.

15. Use of a home care composition according to the first aspect to treat a substrate such as a fabric or hard surface.
